# EUROPEAN PATENT APPLICATION

(11) **EP 2 133 395 A1**
(43) Date of publication of application: **16.12.2009**
(21) Application number: 07860500.3
(22) Date of filing: 28.12.2007
(51) Int. Cl.: C09J 4/04, B65D 47/42, B65D 81/32, B65D 85/00, C09J 7/02, C09J 11/00, C09J 201/00, B05C 17/00

(54) **ADHESIVE MATERIAL, COATING DEVICE FOR ADHESIVE MATERIAL AND TRANSFER SHEET**

(30) Priority: 05.04.2007 JP 2007099457
(71) Applicant: Kokuyo Co., Ltd., 1-1, Oimazato Minami 6-chome Higashinari-ku, Osaka-shi Osaka 537-8686 (JP)
(72) Inventor: KOBAYASHI, Shogo, Osaka-shi Osaka 537-0013 (JP)
(74) Representative: TBK-Patent
(86) International application number: PCT/JP2007/075297
(87) International publication number: WO 2008/129749

(57) **Abstract**

An adhesive material (B) is provided which includes a plurality of (micro)capsules (1) each including: a waterproof outer wall (2) capable of being crushed by an external force; a moisture-curing adhesive (3) encapsulated with the outer wall (2); and a tackiness agent coat (4) formed over an outer surface of the outer wall (2).

## Description

### Technical Field

The present invention relates to: an adhesive material encapsulated in a capsule for use in bonding articles to each other; an adhesive material applicator for application of such an adhesive material; and a transfer sheet applied with such an adhesive material.

### Background Art

Conventionally, a demand exists for lowering the initial bond strength of an adhesive to facilitate adjustment of relative positions of objects of bonding just after application of the adhesive when performing a bonding operation including applying the adhesive onto one of the objects and bringing the portion applied with the adhesive into contact with the other object. As one approach to meet such a demand, an approach has been conceived such that an adhesive material comprising microcapsules each containing an adhesive therein is placed on one object of bonding (see patent documents 1 and 2 for example).
Patent Document 1: Japanese Patent Laid-Open Publication No. 2005-220236
Patent Document 2: Japanese Patent Laid-Open Publication No. 2006-143776

### Disclosure of the Invention

### Problems to be Solved by the Invention

The adhesive material described in patent document 1 is based on the precondition that one of the objects of bonding is a base material, such as a tape or a sticker, which is previously applied with the adhesive material. Patent document 1, however, neither describes nor suggests any form for applying the adhesive material onto a minute portion. With the arrangement described in patent document 1, it is very difficult to apply the adhesive material onto such a minute portion. Another inconvenience that it takes time for the adhesive to dry and solidify is essential to the arrangement described in patent document 1 because the adhesive encapsulated is an aqueous adhesive.

According to the arrangement described in patent document 2, two components which cause a cure reaction to occur therebetween when contacting each other are encapsulated into separate microcapsules. With this arrangement, however, microcapsules of the two types need be uniformly dispersed and then uniformly crushed in order for the two components to be uniformly mixed together and uniformly solidified after the microcapsules have been crushed by bringing the objects of bonding dose to each other. Therefore, the arrangement has an inconvenience that a satisfactory precision cannot be easily attained.

The present invention has been made in order to solve the problems described above.

### Means for Solving the Problems

An adhesive material according to the present invention is characterized by comprising as a major component a capsule including: a waterproof outer wall capable of being crushed by an external force; and a moisture-curing adhesive encapsulated with the outer wall.

Another adhesive material according to the present invention is characterized by comprising a microcapsule including: a waterproof outer wall capable of being crushed by an external force; and a moisture-curing adhesive encapsulated with the outer wall.

Unlike the arrangements described in patent documents 1 and 2, these adhesive materials, each of which has the moisture-curing adhesive encapsulated with the outer wall of the capsule, are each capable of being applied onto a minute portion while allowing the adhesive to be polymerized and cured quickly thereby shortening the time required for objects of bonding to be bonded to each other as compared with the arrangement described in patent document 1 and are each capable of distributing the adhesive more uniformly than the arrangement described in patent document 2. The "microcapsule", as used in the present invention, is a concept defining a capsule having an outer diameter of less than 1,000 µm.

Conventionally, the moisture-curing adhesive has suffered from an inconvenience that since the moisture-curing adhesive is solidified rapidly by moisture contained in air as described above, the storage life thereof is at most about one year even under an unopened cool and dark storage condition and, hence, the moisture-curing adhesive, if stored for a longer period than the storage life, solidifies before use and cannot serve the purpose of adhesive. However, the waterproof outer wall can shield the adhesive from water contained in air thereby making it possible to store the adhesive for a longer period of time. A cyanoacrylate adhesive, in particular, has a peculiar strong smell which sometimes makes the user unpleasant during use of such an adhesive. The outer wall encapsulating the adhesive can suppress emission of such a smell.

An adhesive material according to the present invention comprises a plurality of capsules or microcapsules each including: a waterproof outer wall capable of being crushed by an external force; a moisture-curing adhesive encapsulated with the outer wall; and a tackiness agent coat formed over an outer surface of the outer wall. The tackiness agent coat can fix each capsule or microcapsule onto an object of bonding thereby positioning the capsule or microcapsule relative to the object.

An adhesive material according to the present invention comprises a plurality of capsules or microcapsules each including: a waterproof outer wall capable of being crushed by an external force; and a moisture-curing adhesive encapsulated with the outer wall, the plurality of capsules or microcapsules being dispersed in a tackiness or adhesive agent. This adhesive material also allows each capsule or microcapsule to be fixed onto an object of bonding thereby positioning the capsule or microcapsule relative to the object.

Particularly where the capsules or microcapsules each have a diameter made larger than a coating thickness of the tackiness or adhesive agent, it is possible to crush the capsules or microcapsules more reliably, thereby to release the moisture-curing adhesive out of the capsules or microcapsules because, when an external force is exerted on the adhesive material having been applied onto one object of bonding to achieve bonding, the other object of bonding is brought into contact with the capsules or microcapsules prior to contact with the tackiness or adhesive agent.

It is possible that: a main bond threshold value, which is a lower limit of the external force at which the capsules or microcapsules are mostly crushed, is not less than 10 N/cm² and less than 150 N/cm²; and the outer wall has a strength set so as not to allow any one of the capsules or microcapsules to be crushed by an external force of less than a provisional bond threshold value which is not more than a predetermined value which is not more than a smaller one of the main bond threshold value and a value of 50 N/cm². With this feature, it is possible to realize an embodiment which is capable of fixing the capsules or microcapsules onto an object of bonding without crushing the capsules or microcapsules when applying the adhesive material onto the object while allowing a strong external force to be exerted on the capsules or microcapsules to crush them thereby releasing the moisture-curing adhesive to the outside when performing bonding.

Particularly where the main bond threshold value is not less than a value twice as large as the provisional bond threshold value, the outer wall can be easily designed to have a strength such as not to allow the capsules or microcapsules to be crushed accidentally during application of the adhesive material onto an object of bonding.

More preferably, the main bond threshold value is not less than a value 2.5 times as large as the provisional bond threshold value and less than a value 6 times as large as the provisional bond threshold value. With such a feature, it is possible to obtain the advantage described above more effectively. Further, since the difference between the external force to be exerted on the capsules or microcapsules for provisional bond and the external force to be exerted on the capsules or microcapsules for main bond is clear, crush control can be achieved more reliably even when the external force required to crush the capsules or microcapsules has a distribution or variation of force. For this reason, it is possible to make the ease of design and the practicality compatible with each other.

In order to shorten the time required to bond objects of bonding to each other, the moisture-curing adhesive is a cyanoacrylate adhesive. This is because such a cyanoacrylate adhesive can be polymerized and cured quickly, specifically, in several minutes in the presence of water (i.e., moisture) contained in air serving as a catalyst.

Yet another adhesive material according to the present invention is characterized by comprising as a major component a capsule or microcapsule including: a porous particle; and a moisture-curing adhesive contained in a hollow of the porous particle.

Unlike the arrangements described in patent documents 1 and 2, this adhesive material, which has the moisture-curing adhesive contained in the hollow of the porous particle, is capable of being applied onto a minute portion while allowing the adhesive to be polymerized and cured quickly thereby shortening the time required to bond objects of bonding to each other as compared with the arrangement described in patent document 1 and is capable of distributing the adhesive more uniformly than the arrangement described in patent document 2.

Particularly where the porous particle is formed from an inorganic material, the porous particle does not easily dissolve into the moisture-curing adhesive and, hence, the moisture-curing adhesive can be stored more stably.

The capsule or microcapsule may further include a coating layer covering pores which are present on a surface of the porous particle. With such a feature, it is possible to prevent moisture contained in air from reaching the moisture-curing adhesive contained in the hollow of the porous particle through the coating layer. That is, the coating layer can shield the adhesive from water contained in air thereby making it possible to store the adhesive for a longer period of time. A cyanoacrylate adhesive, in particular, has a peculiar strong smell which sometimes makes the user unpleasant during use of such an adhesive. The coating layer covering the pores present on the surface of the porous particle can suppress emission of such a smell.

The capsule or microcapsule may further include a tackiness agent coat formed over an outer surface thereof. The tackiness agent coat can fix the capsule or microcapsule onto an object of bonding thereby positioning the capsule or microcapsule relative to the object.

The capsule or microcapsule may comprise a plurality of such capsules or microcapsules dispersed in a tackiness or adhesive agent. This feature also allows each capsule or microcapsule to be fixed onto an object of bonding thereby positioning the capsule or microcapsule relative to the object.

In one embodiment which can reduce the external force required to crush the capsule or microcapsule, the adhesive material may further comprise crush promoter particles for promoting crush of the capsule or microcapsule. With such a feature, the crush promoter particles perform the function of breaking the outer wall of the capsule or microcapsule when subjected to an action such as pressing or the function of assisting in breaking the outer wall of the capsule or microcapsule thereby facilitating crush of the outer wall. Therefore, the moisture-curing adhesive encapsulated with the outer wall can be released out of the capsule or microcapsule. The "action such as pressing", as used above, is meant to include not only an action to directly press against the capsule or microcapsule but also an action to lead the crush promoter particles toward the outer surface of the capsule or microcapsule by a remote action of magnetic force, electrostatic force or the like. The "crush promoter particles", as used in the present invention, is a concept encompassing all the types of particles which can break the capsule or microcapsule or assist in breaking the capsule or microcapsule, including: particles of the type which has prickles on an outer surface of each particle and which acts to break the capsule or microcapsule or assists in breaking the capsule or microcapsule by pressing the prickles against the capsule or microcapsule; magnetic particles which act to break the capsule or microcapsule or assists in breaking the capsule or microcapsule by being pressed against the capsule or microcapsule by attraction of magnetic force; and balloons each of which contains gas therein and acts to break the capsule or microcapsule or assists in breaking the capsule or microcapsule by explosion.

In an exemplary arrangement which is configured to effectively prevent occurrence of the inconvenience that the moisture-curing adhesive contained in the capsule or microcapsule solidifies before use, the outer wall of the capsule or microcapsule, the porous particle or the coating layer covering the outer wall or the pores of the porous particle is formed using a water repellent material. With such a feature, it is possible to inhibit water from reaching the interior of the capsule or microcapsule by virtue of the water repellency of the outer wall or porous particle. The concept "the coating layer is formed using the water repellent material" includes not only cases where the coating layer is formed from the water repellent material only, but also cases where the coating layer is formed from a material prepared by mixing the water repellent material into another material.

In an embodiment which is configured to allow the capsule or microcapsule to be crushed easily, the outer wall of the capsule or microcapsule or the porous particle is formed from a plurality of materials by using a mixture of the plural materials which are incompatible with each other and different in thermal expansion coefficient or thermal shrinkage factor from each other. With such a feature, the capsule or microcapsule can be crushed easily when subjected to pressing because the outer wall or the porous particle is cracked or wrinkled to such an extent as not allow water, air or the like to penetrate the outer wall or the porous particle due to the difference in thermal expansion coefficient or thermal shrinkage factor between the plural materials forming the outer wall or the porous particle. Thus, the moisture-curing adhesive can be easily released.

In another embodiment which is configured to allow the capsules or microcapsules to be crushed easily, the adhesive material includes capsules or microcapsules having different sizes. With such a feature, the external force required to crush an individual capsule or microcapsule need not be so large because all the capsules or microcapsules are not simultaneously subjected to the external force, but are sequentially subjected to the external force from larger ones to smaller ones in such a manner that largest ones are first subjected to the external force.

An adhesive material applicator for suitable application of the adhesive material recited in claim 3 or 13 comprises: a main body having a container room for containing the adhesive material recited in claim 3 or 13; and a nozzle for delivering the adhesive material by portions from the container room to outside. Such an adhesive material applicator is capable of delivering a small amount of the adhesive material directly to a bonding point, the adhesive material including the capsule or microcapsule encapsulating the moisture-curing adhesive therein, and the tackiness agent coat formed over the outer surface of the capsule or microcapsule.

An embodiment of such an adhesive material applicator, which is configured to minimize waste produced when the adhesive material contained in the container room has run out, is provided with a refill charged with the adhesive material for refilling the container room and removably attached to the main body. With such a feature, when the adhesive material contained in the container room has run out, only the refill has to be replaced, whereas other parts can be used continuously without the need for disposal.

In an embodiment which can limit the delivery of the adhesive material more effectively, the nozzle is provided at a tip thereof with a delivery limiting roller for controlling a delivery of the adhesive material.

According to an embodiment which allows a bonding operation to be performed more effectively, the adhesive material applicator further comprises a pair of tweezers having a pinching portion capable of pinching an object of bonding and a pressing surface provided at a base end of the pinching portion for pressing against the object of bonding, the pair of tweezers being mountable on an outer peripheral surface of the main body. With such a feature, it is possible to pinch one object of bonding and press it against the other object of bonding by the pinching portion of the tweezers, as well as to press one object of bonding against the other object of bonding by the pressing surface of the pair of tweezers. Moreover, the pair of tweezers and the main body can be handled as one piece when the pair of tweezers is mounted on the main body, whereby the pair of tweezers can be prevented from being lost.

As an embodiment of an adhesive material applicator for suitable application of the adhesive material recited in claim 4 or 14, there is provided an adhesive material applicator for application of the adhesive material recited in claim 4 which includes the plurality of capsules or microcapsules each including the waterproof outer wall capable of being crushed by the external force and the moisture-curing adhesive encapsulated with the outer wall, the plurality of capsules and microcapsules being dispersed in the tackiness or adhesive agent, or for application of the adhesive material recited in claim 14 which includes the plurality of capsules or microcapsules each including the porous particle and the moisture-curing adhesive contained in the hollow of the porous particle, the plurality of capsules and microcapsules being dispersed in the tackiness or adhesive agent, the adhesive material applicator comprising: a main body provided therein with a capsule container room for containing the microcapsules and a tackiness liquid container room for containing the tackiness or adhesive agent; and a nozzle for delivering the adhesive material including the capsules or microcapsules mixed in the tackiness or adhesive agent out of the main body. Such an adhesive material applicator is capable of delivering a small amount of the adhesive material directly to a bonding point, with the capsules or microcapsules in a state of being mixed in the tackiness or adhesive agent.

In an embodiment of such an adhesive material applicator which is configured to minimize waste produced when the adhesive material contained in the container room has run out, the capsule container room and the tackiness liquid container room are formed in a refill which is removable from the main body. With such a feature, when the adhesive material contained in the container room has run out, only the refill has to be replaced, whereas other parts can be used continuously without the need for disposal.

As another embodiment of an adhesive material applicator for suitable application of the adhesive material recited in claim 4 or 14, there is provided an adhesive material applicator for application of the adhesive material recited in claim 4 which includes the plurality of capsules or microcapsules each including the waterproof outer wall capable of being crushed by the external force and the moisture-curing adhesive encapsulated with the outer wall, the plurality of capsules or microcapsules being dispersed in the tackiness or adhesive agent, or for application the adhesive material recited in claim 14 which includes the plurality of capsules or microcapsules each including the porous particle and the moisture-curing adhesive contained in the hollow of the porous particle, the plurality of capsules or microcapsules being dispersed in the tackiness or adhesive agent, the adhesive material applicator comprising: a pair of flaps foldably joined to each other by means of a hinge portion; a deformable capsule container portion containing the capsules or microcapsules therein which is provided on one of the flaps; a deformable tackiness liquid container portion containing the tackiness agent or adhesive therein which is provided on the other flap; a nozzle configured to join the capsules or microcapsules and the tackiness or adhesive agent together and then deliver a resulting mixture to outside when the capsules or microcapsules and the tackiness or adhesive agent are pushed out of the capsule container portion and the tackiness liquid container portion, respectively, by compression of the capsule container portion and the tackiness liquid container portion by an operation of folding the flaps toward each other. Such an adhesive material applicator is also capable of delivering a small amount of the adhesive material directly to a bonding point, with the capsules or microcapsules in a state of being mixed in the tackiness or adhesive agent. Such nozzles include a nozzle utilizing an opening which is formed at the boundary between the flaps by the operation of folding the flaps toward each other.

A transfer sheet according to the present invention is characterized by comprising a sheet-shaped release base comprising paper or film, and the adhesive material recited in any one of claims 3, 4, 13 and 14 applied onto the release base. With such a transfer sheet, application of the adhesive material can be achieved easily by utilizing a transfer device having a conventional transfer sheet accommodated in a cartridge.

Particularly where the transfer sheet is characterized by comprising a sheet-shaped release base comprising paper or film, and the adhesive material recited in claim 4 or 14 applied onto release base, wherein the adhesive material is applied in a dotted fashion, the so-called "adhesive cutting property" is enhanced and, hence, the adhesive material can be transferred from the release base to an object of bonding without waste.

Preferably, the capsules or microcapsules each have an outer diameter set to a value of not less than 2 µm and less than 3,000 µm. If the outer diameter is less than 2 µm, an inconvenience that each microcapsule fails to be crushed and fails to release the adhesive material, is likely to occur. On the other hand, if the outer diameter is more than 3,000 µm, an inconvenience that each capsule is crushed undesirably by a slight force working in transferring it from the transfer sheet, is possible to occur. Particularly where the adhesive material is applied onto the transfer sheet, the microcapsules each have an outer diameter preferably set to a value of not less than 2 µm and less than 300 µm. This is because the outer diameter of each microcapsule has to be set equal to or smaller than the coating thickness of the transfer adhesive, which is usually not more than 300 µm, desirably not more than 100 µm.

The transfer sheet may further comprise crush promoter particles provided on a surface of the release base lying on a side onto which the adhesive material is applied for promoting crush of the capsules or microcapsules. With such a feature, each capsule or microcapsule can be crushed by pressing the crush promoter particles against the capsule or microcapsule when releasing the adhesive material from the release base, thereby exposing the moisture-curing adhesive on an object of bonding.

### Advantages of the Invention

The adhesive material according to the present invention, which has the moisture-curing adhesive encapsulated with the outer wall of the capsule or microcapsule, is capable of shielding the adhesive from water contained in air by the outer wall thereby making it possible to store the adhesive for a longer period of time as well as to suppress emission of the smell peculiar to the adhesive.

Particularly, the adhesive material in which the capsule or microcapsule has the tackiness agent coat formed over the outer surface of the outer wall, or the adhesive material in which the plurality of capsules or microcapsules are dispersed in the tackiness or adhesive agent, allows each capsule or microcapsule to be positioned relative to one object of bonding by fixing the capsule or microcapsule onto the object by means of the tackiness agent coat or the tackiness or adhesive agent and then crushed by the pressure working in pressing this object and the other object of bonding against each other, thereby releasing the moisture-curing adhesive to achieve bonding.

### Brief Description of the Drawings

FIG. 1 is a sectional view illustrating an adhesive material according to a first embodiment of the present invention;
FIG. 2 is a general perspective view illustrating a first adhesive material applicator according to the same embodiment;
FIG. 3 is an exploded perspective view illustrating the first adhesive material applicator according to the same embodiment;
FIG. 4 is a view illustrating the first adhesive material applicator according to the same embodiment in a state of use;
FIG. 5 is a general perspective view illustrating a second adhesive material applicator according to the same embodiment;
FIG. 6 is an exploded perspective view illustrating the second adhesive material applicator according to the same embodiment;
FIG. 7 is a view illustrating the second adhesive material applicator according to the same embodiment in a state of use;
FIG. 8 is a general perspective view illustrating a third adhesive material applicator according to the same embodiment;
FIG. 9 is a plan view illustrating a transfer sheet according to the same embodiment;
FIG. 10 is a sectional view illustrating an adhesive material according to a second embodiment of the present invention;
FIG. 11 is a general perspective view illustrating a fourth adhesive material applicator according to the same embodiment;
FIG. 12 is an exploded perspective view illustrating the fourth adhesive material applicator according to the same embodiment;
FIG. 13 is a view illustrating the fourth adhesive material applicator according to the same embodiment in a state of use;
FIG. 14 is a general perspective view illustrating a fifth adhesive material applicator according to the same embodiment;
FIG. 15 is an exploded perspective view illustrating the fifth adhesive material applicator according to the same embodiment;
FIG. 16 is a view illustrating the fifth adhesive material applicator according to the same embodiment in a state of use;
FIG. 17 is a general perspective view illustrating a sixth adhesive material applicator according to the same embodiment;
FIG. 18 is a view illustrating the sixth adhesive material applicator according to the same embodiment in a state of use;
FIG. 19 is a general perspective view illustrating the sixth adhesive material applicator according to the same embodiment;
FIG. 20 is a view illustrating a seventh adhesive material applicator according to the same embodiment in a state of use;
FIG. 21 is a plan view illustrating a transfer sheet according to the same embodiment;
FIG. 22 is a sectional view illustrating an adhesive material according to another embodiment of the present invention;
FIG. 23 is a sectional view illustrating an adhesive material according to another embodiment of the present invention;
FIG. 24 is a sectional view illustrating an adhesive material according to another embodiment of the present invention;
FIG. 25 is a sectional view illustrating an adhesive material according to another embodiment of the present invention;
FIG. 26 is a sectional view illustrating an adhesive material according to another embodiment of the present invention;
FIG. 27 is a sectional view illustrating an adhesive material according to another embodiment of the present invention;
FIG. 28 is a sectional view illustrating an adhesive material according to another embodiment of the present invention;
FIG. 29 is a sectional view illustrating an adhesive material according to a third embodiment of the present invention;
FIG. 30 is a sectional view illustrating a capsule included in an adhesive material according to another embodiment of the present invention;

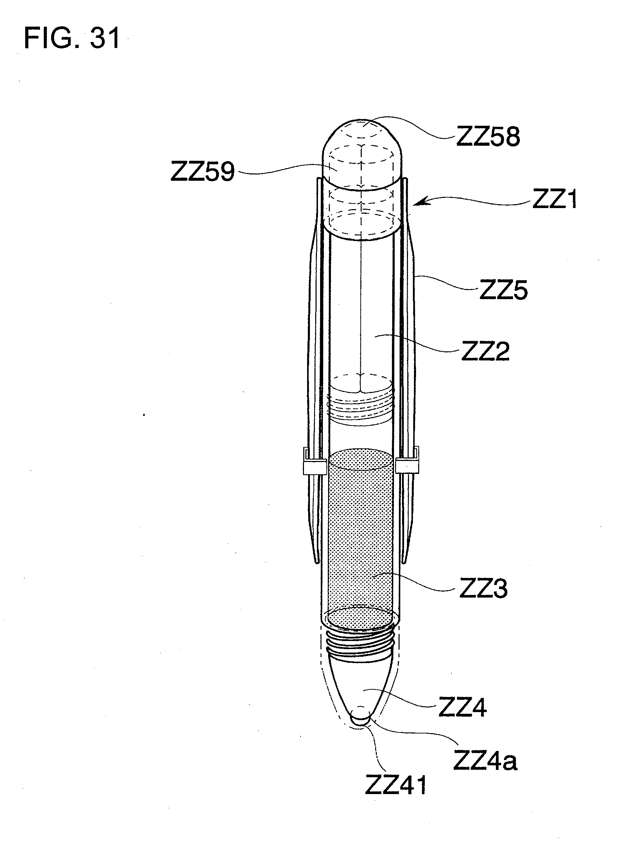

FIG. 31 is a general perspective view illustrating an adhesive material applicator according to the same embodiment;
FIG. 32 is a vertical sectional view, taken centrally, of a portion of concern of the adhesive material applicator according to the same embodiment;
FIG. 33 is a sectional view illustrating a capsule included in an adhesive material according to another embodiment of the present invention;
FIG. 34 is a sectional view illustrating a capsule included in an adhesive material according to another embodiment of the present invention;
FIG. 35 is a sectional view illustrating a capsule included in an adhesive material according to another embodiment of the present invention;
FIG. 36 is a general perspective view illustrating an adhesive material applicator according to another embodiment of the present invention;
FIG. 37 is a sectional view illustrating a capsule included in an adhesive material according to another embodiment of the present invention;
FIG. 38 is a view illustrating an adhesive material according to another embodiment of the present invention in a state of being applied;
FIG. 39 is a sectional view illustrating a transfer sheet according to another embodiment of the present invention; and
FIG. 40 is a sectional view illustrating an adhesive material according to another embodiment of the present invention.

### Description of Reference Characters

B,BB,BBB...adhesive material
1,10...microcapsule
2...outer wall
Z2...porous particle
3...moisture-curing adhesive
4...tackiness agent coat
40...tackiness agent
A1,AA1...first and second adhesive material applicators
X1,XX1...fourth and fifth adhesive material applicators
A2,AA2,X2,XX2...main body
A3,AA3,X3,XX3...refill
A4,AA4,X4,XX4...nozzle
A5,AA5,X5,XX5...tweezers
ST,XST...transfer sheet

### Best Mode for Carrying Out the Invention

Hereinafter, a first embodiment of the present invention will be described with reference to the drawings.

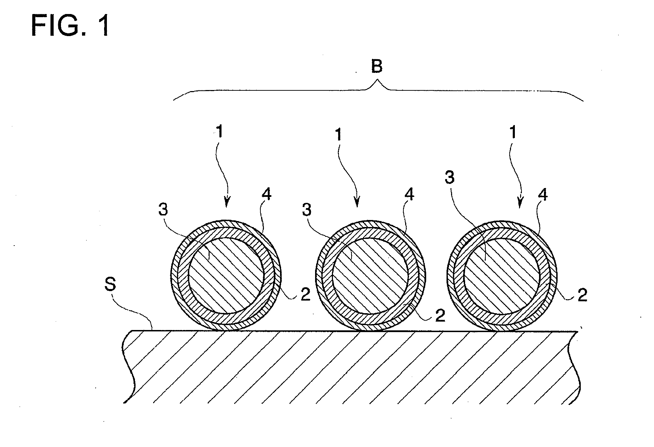

An adhesive material B according to the present embodiment comprises a plurality of capsules or microcapsules (hereinafter will be referred to as "(micro)capsules 1") each including: a waterproof outer wall 2 capable of being crushed by an external force; a moisture-curing adhesive 3 encapsulated with the outer wall 2, and a tackiness agent coat 4 formed over an outer surface of the outer wall 2, as illustrated in the sectional view in FIG. 1. When objects S of bonding in a state in which the adhesive material B is applied onto one object S of bonding while the other object of bonding is placed over the adhesive material are brought into pressure contact with each other, the adhesive material B exercises the function of bonding the objects to each other by allowing the outer wall to be crushed to release the moisture-curing adhesive 3.

More specifically, the (micro)capsules 1 are prepared by encapsulating the moisture-curing adhesive 3 with the outer wall 2 by a suitable one of various microcapsule preparation methods including an interfacial polymerization method and then applying a tackiness or adhesive agent onto the outer surface of the outer wall 2 by spraying or a like method to form the tackiness agent coat 4. Examples of processes for encapsulating the moisture-curing adhesive with the outer wall 2 include known processes such as drying in liquid, interfacial polymerization, in situ polymerization, and phase separation.

The material of the outer wall 2 has to be a material which is impermeable to water molecules and incompatible with the moisture-curing adhesive 3 and fails to chemically react with the moisture-curing adhesive 3. Examples of such materials include organic compounds, representatives of which are hydrophobic natural or synthetic polymer waxes, and inorganic compounds. Further, the material forming the outer wall 2 is desirably a material which fails to form pores or forms only very small pores each having a smaller size than a water molecule when formed into a film. The thickness dimension of the outer wall 2 has to be set such that the outer wall 2 is crushed when subjected to an external force of not less than a predetermined main bond threshold value Z1. Here, the main bond threshold value Z1 is set to fall within a range from a value of not less than 10 N/cm² to a value of less than 150 N/cm², more preferably from a value of not less than 20 N/cm² to a value of less than 100 N/cm². The value of 10 N/cm² is determined in view of a pressure exerted on each (micro)capsule 1 in provisionally positioning objects of bonding relative to each other by applying the adhesive material B onto one object and placing the other object thereon. On the other hand, the value of 150 N/cm² is determined in view of a practical upper limit of pressure exerted on the objects of bonding during an operation of pressing the objects against each other. Further, the thickness dimension of the outer wall 2 is set such that any one of the (micro)capsules 1 is not crushed by an external force of not more than a predetermined provisional bond threshold value Z2. The provisional bond threshold value Z2 is not more than a smaller one of a value of 50 N/cm² and the main bond threshold value Z1, more preferably not more than 20 N/cm². When the main bond threshold value Z1 is set to fall within the range from a value of not less than 20 N/cm² to a value of less than 100 N/cm², ease of design of the outer wall 2 and ease of use can be easily made compatible with each other. Particularly when the main bond threshold value Z1 is not less than a value twice as large as the provisional bond threshold value Z2, more preferably, not less than a value 2.5 times as large as the provisional bond threshold value Z2 and less than a value 6 times as large as the provisional bond threshold value Z2, the ease of design of the outer wall 2 and the ease of use can be easily made compatible with each other, while the practicality of the adhesive material can be enhanced.

In the present embodiment, the moisture-curing adhesive 3 comprises a cyanoacrylate adhesive well-known as an instant adhesive.

Examples of suitable materials for the tackiness agent coat 4 include rubber tackiness agents, acrylic tackiness agents, urethane tackiness agents, silicone tackiness agents, and vinyl ether tackiness agents. The moisture-curing adhesive 3 may comprise an adhesive well-known as a one-pack type polyurethane resin adhesive, one-pack type silicone resin adhesive, silicone-modified epoxy adhesive, or the like. Particularly preferably, use is made of an adhesive having a molecular structure wherein: a monomer or prepolymer molecule contains an unsaturated bond between carbon atoms or between a carbon atom and another atom; and such unsaturated bond portions can be polymerized in the presence of water (i.e., moisture) contained in air as a catalyst.

Each (micro)capsule 1 has an outer diameter set to a value of not less than 2 µm and less than 3,000 µm, more preferably not less than 5 µm and less than 1,000 µm. Here, the outer diameter of each (micro)capsule 1 is set to fall within such a range because if the outer diameter is less than 2 µm, the outer wall 2 fails to be crushed even when subjected to an external force of not less than 150 N/cm², with the result that the moisture-curing adhesive 3 fails to be released without serving its purpose, while, on the other hand, if the outer diameter is more than 3,000 µm, an inconvenience may arise that the outer wall 2 is crushed to release the moisture-curing adhesive 3 undesirably during application of (micro)capsules 1 at an external force of not more than 10 N/cm².

Application of the adhesive material is performed using a first or second adhesive material applicator A1 or AA1 to be described below.

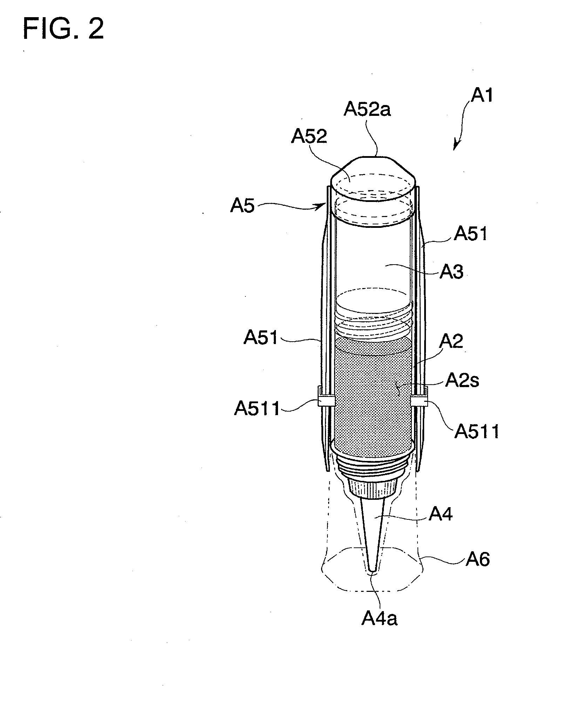

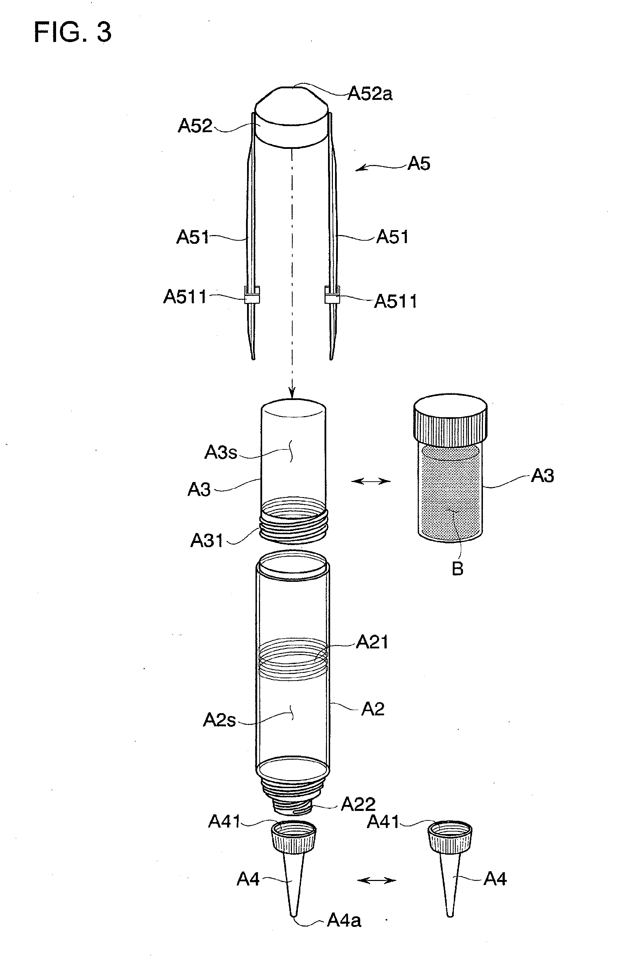

The first adhesive material applicator A1 comprises: a main body A2; a refill A3 removably attached to a base portion of the main body A2; a nozzle A4 removably attached to a tip portion of the main body A2; and a pair of tweezers A5 which can be fitted over the main body A2 and has a pressing surface A52a at a base end portion thereof, as illustrated in the general perspective view and the exploded perspective view in FIGs. 2 and 3, respectively

In the present embodiment, the main body A2 is tubular-shaped and provided with a container room A2s for containing the adhesive material therein. The main body A2 has a longitudinally intermediate portion provided with an internal thread portion A21 which is threadingly engageable with an external thread portion A31 provided on the refill A3, and a near tip portion provided with an internal thread portion A22 which is threadingly engageable with an external thread portion A41 provided on the nozzle A4.

In the present embodiment, the refill A3 has a bottomed tubular shape and is provided with a container room A3s containing the adhesive material therein. The refill A3 has a tip portion provided with the external thread portion A31 which is threadingly engageable with the internal thread portion A21 provided on the longitudinally intermediate portion of the main body A2. Thus, the tip portion of the refill A3 can be fitted into the main body A2. When the refill A3 is fitted into the main body A2, the container room A3s of the refill A3 comes to communicate with the container room A2s of the main body A2.

In the present embodiment, the nozzle A4 has a substantially conical shape with its sectional area decreasing as the nozzle A4 extends toward its tip. The tip of the nozzle A4 defines an adhesive material delivery hole A4a for delivering the adhesive material B. When not in use, the nozzle A4 is covered with a cap A6.

The pair of tweezers A5 has a pinching portion formed by joining a pair of pinching elements A51 together at a base end portion, and a pressing portion A52 covering the base end side of the pinching portion and having the pressing surface A52a. Each of the pinching elements A51 forming the pinching portion of the pair of tweezers A5 has a fitting piece A511 for engagement with an outer peripheral surface of the main body A2. With the pair of tweezers A5 in a position in which the fitting pieces A511 are in engagement with the outer peripheral surface of the main body A2 while a surface of the pressing portion A52 which is opposite away from the pressing surface A52a is abutting against or covering the base end side of the refill A3, the pair of tweezers A5 can be mounted on the main body A2.

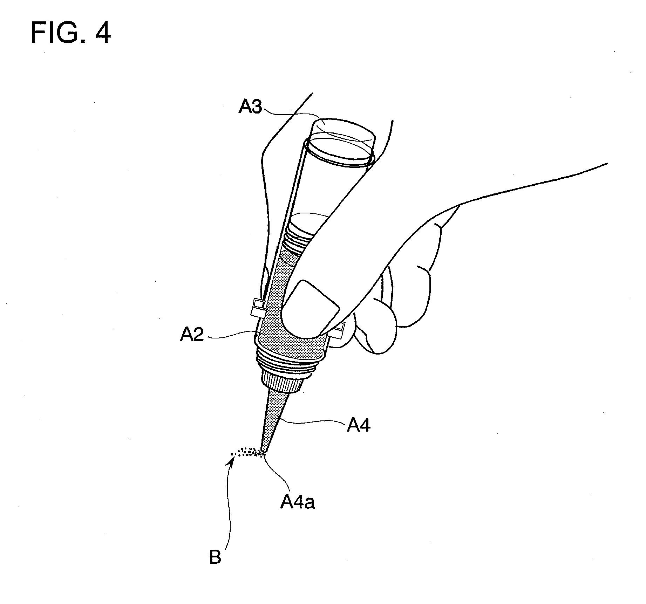

In applying the adhesive material B onto objects S of bonding with use of the first adhesive material applicator A1, the adhesive material delivery hole A4a at the tip of the nozzle A4 is brought dose to one object and then the main body A2 is compressed as illustrated in FIG. 4. By so doing, the adhesive material B, i.e., (micro)capsules 1, is delivered out of the container room A2s. At that time, the position of each of the (micro)capsules 1 relative to one object S is provisionally fixed as it is because the tackiness agent coat 4 is formed as the outermost layer of the (micro)capsule 1 as described above and as illustrated in FIG. 1. In the present embodiment, the external force exerted on each (micro)capsule 1 at that time is less than 20 N/cm², which is smaller than the predetermined threshold value Z1 of external force required to crush most of the (micro)capsules 1. Thereafter, if one of the objects of bonding is small to such an extent as can be pinched by the pinching portion of the pair of tweezers A5, the pair of tweezers A5 is removed from the main body A2 to pinch the small object by the pinching portion and then the small object is pressed against the other object. If both the objects of bonding are large to such an extent as cannot be pinched by the pinching portion of the pair of tweezers A5, the adhesive material B is placed between one object and the other object and then the pressing surface A52a of the tweezers A5 is abutted against one object and pressed toward the other object. By so doing, a strong external force that is not less than the predetermined threshold value Z1 is exerted on each (micro)capsule 1 to crush the outer wall 2, thereby causing the moisture-curing adhesive 3 to be released. With lapse of several minutes, the moisture-curing adhesive 3 is cured in the presence of water (i.e., moisture) contained in air as a catalyst to bond the two objects to each other.

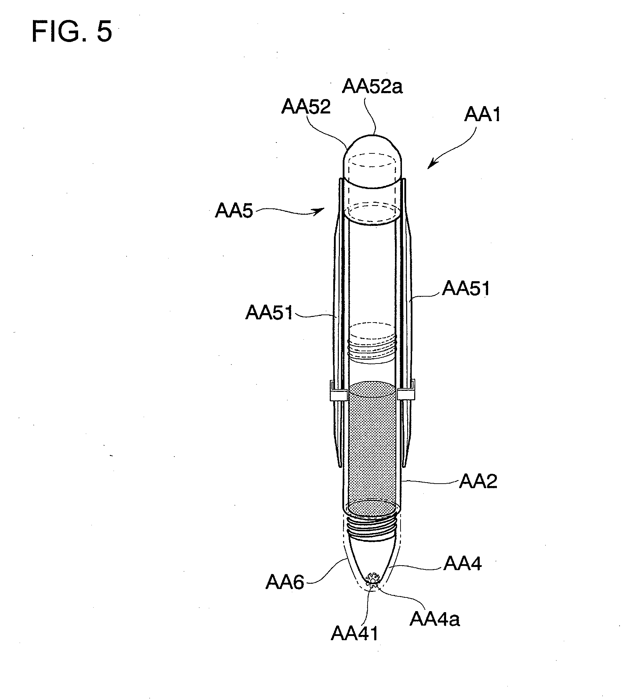

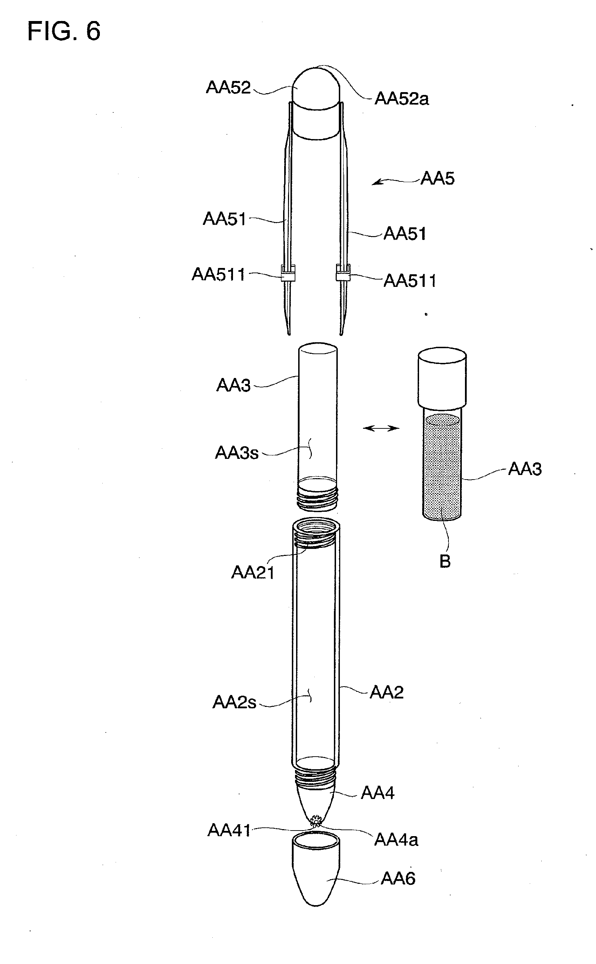

The second adhesive material applicator AA1 comprises: a main body AA2; a refill AA3 removably attached to a base portion of the main body AA2; a nozzle AA4 fixedly attached to a tip portion of the main body AA2; a delivery limiting roller AA41 located at a tip of the nozzle AA4 for controlling the delivery of the adhesive material B; and a pair of tweezers AA5 which can fitted over the main body AA2 and has a pressing surface AA52a at a base end portion thereof, as illustrated in the general perspective view and the exploded perspective view in FIGs. 5 and 6, respectively.

The main body AA2, refill AA3 and the pair of tweezers AA5 are substantially similar to the corresponding parts of the aforementioned first adhesive material applicator. However, the second adhesive applicator AA1, as a whole, has an outer diameter and a longitudinal dimension which are substantially equal to the corresponding dimensions of a writing pen of the type widely put on the market

The nozzle AA4 is also substantially similar to that of the aforementioned first adhesive material applicator. That is, in this embodiment also, the nozzle AA4 has a substantially conical shape with its sectional area decreasing as the nozzle AA4 extends toward its tip. The tip of the nozzle AA4 defines an adhesive material delivery hole AA4a for delivering the adhesive material B. The present embodiment, however, is provided with the delivery limiting roller AA41 supported in the vicinity of the adhesive material delivery hole AA4a.

The delivery limiting roller AA41, which is located in the vicinity of the adhesive material delivery hole AA4a of the nozzle AA4 as described above, is a member in the form of a toothed wheel. The delivery limiting roller AA41 is configured to hold (micro)capsules 1 between adjacent teeth located on the main body A2 side, orient the portion holding the adhesive material B to an object S of bonding by rotation, and release the (micro)capsules 1 toward the object S. When not in use, the delivery limiting roller AA41 and the nozzle AA4 are covered with a cap AA6.

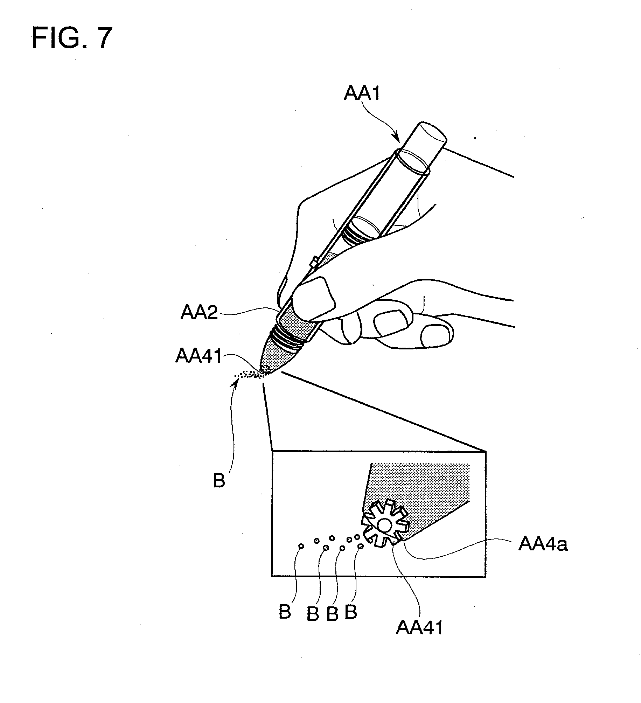

In applying the adhesive material onto objects S of bonding with use of the second adhesive material applicator AA1, the delivery limiting roller AA41 is brought dose to one object S and then rotated as illustrated in FIG. 7. With rotation of the delivery limiting roller AA41, the adhesive material B, i.e., (micro)capsules 1, is delivered out of the container room AA2s. At that time, the position of each of the (micro)capsules 1 relative to one object S is provisionally fixed as it is because the tackiness agent coat 4 is formed as the outermost layer of each (micro)capsule 1, as illustrated in FIG. 1. Thereafter, the same procedure as with the first adhesive material applicator A1 follows. Specifically, if one of the objects of bonding is small to such an extent as can be pinched by the pinching portion of the pair of tweezers AA5, the pair of tweezers AA5 is removed from the main body AA2 to pinch the small object by the pinching portion and then the small object is pressed against the other object. If both the objects of bonding are large to such an extent as cannot be pinched by the pinching portion of the pair of tweezers AA5, the adhesive material B is placed between one object and the other object and then the pressing surface AA52a of the pair of tweezers AA5 is abutted against one object and pressed toward the other object. By so doing, a strong external force that is not less than the predetermined threshold value Z1 is exerted on each (micro)capsule 1 to crush the outer wall 2, thereby causing the moisture-curing adhesive 3 to be released. With lapse of several minutes, the moisture-curing adhesive 3 is cured in the presence of water (i.e., moisture) contained in air as a catalyst to bond the two objects to each other.

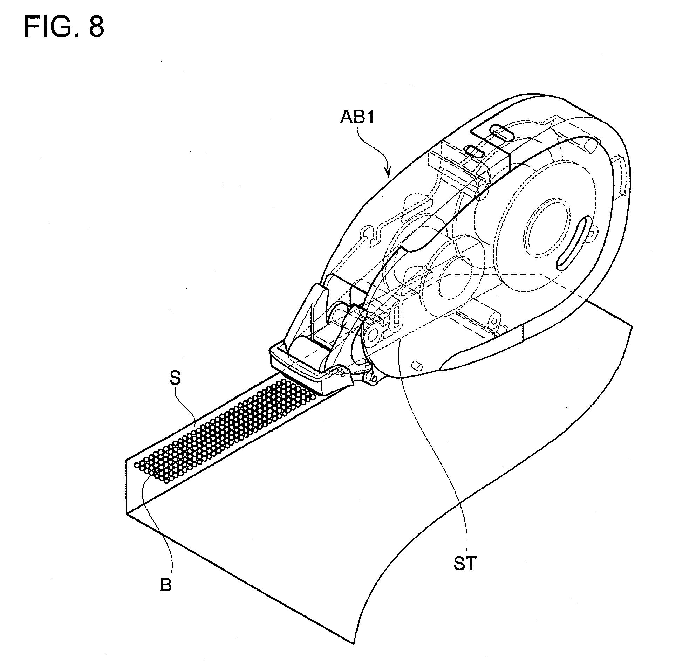

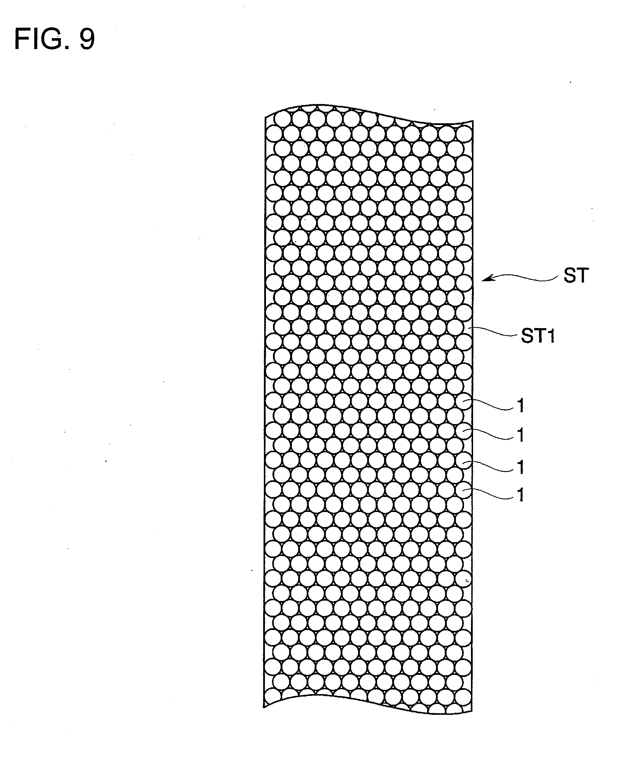

The adhesive material B may be applied onto a transfer sheet ST to be described below and then transferred to an object S of bonding from the transfer sheet ST with use of a third adhesive material applicator, as illustrated in FIGs. 8 and 9.

As illustrated in FIG. 9, the transfer sheet ST comprises a base ST1 and the (micro)capsules 1 densely applied onto the base ST1. Such a transfer sheet ST may be distributed in a state of being wound about a core used in a transfer device as illustrated in FIG. 8 or in the form of a sheet comprising a release sheet (not illustrated) placed over the (micro)capsules 1. In such a case, the outer diameter of each (micro)capsule 1 need be not less than 2 µm and less than 300 µm, more desirably not less than 5 µm and less than 100 µm. This is because the outer diameter of each (micro)capsule 1 has to be equal to or smaller than the coating thickness of the transfer adhesive, which is usually not more than 300 µm, more desirably not more than 100 µm.

The third adhesive material applicator AB1 has the same arrangement as a well-known transfer device, as illustrated in FIG. 8.

Since the above-described adhesive material has the arrangement in which the moisture-curing adhesive 3 is encapsulated with the outer wall 2 of each (micro)capsule 1, the adhesive material allows the adhesive to be polymerized and cured quickly thereby shortening the time required for objects of bonding to be bonded to each other as compared with the arrangement described in patent document 1 and is capable of distributing the moisture-curing adhesive 3 more uniformly than the arrangement described in patent document 2. Further, since the moisture-curing adhesive 3 is shielded from water contained in air by the waterproof outer wall 2, the moisture-curing adhesive 3 can be stored for a longer period of time than a common moisture-curing adhesive. In addition, though a cyanoacrylate adhesive used as the moisture-curing adhesive 3, in particular, has a peculiar strong smell which sometimes makes the user unpleasant, the present embodiment in which such a cyanoacrylate adhesive is encapsulated with the outer wall 2 can suppress emission of such a smell. Since the cyanoacrylate adhesive can be polymerized and cured quickly, specifically, in several minutes in the presence of water (i.e., moisture) contained in air as a catalyst, the time required for the objects of bonding to be bonded to each other can be advantageously shortened.

Since the adhesive material employs the arrangement comprising the plurality of (micro)capsules 1 each including: the waterproof outer wall 2 capable of being crushed by an external force; the moisture-curing adhesive 3 encapsulated with the outer wall 2; and the tackiness agent coat 4 formed over an outer surface of the outer wall 2, the tackiness agent coat 2 can fix each (micro)capsule 1 onto an object of bonding thereby positioning the (micro)capsule 1 relative to the object.

Since the outer wall 2 has a strength set so as not to allow any one of the (micro)capsules 1 to be crushed by an external force of less than 20 N/cm² but allow most of the (micro)capsules 1 to be crushed by an external force of not less than the predetermined threshold value Z1 (20 N/cm²≦Z1<100 N/cm²), it is possible to realize an embodiment which is capable of fixing the (micro)capsules 1 onto an object of bonding without crushing the (micro)capsules 1 when applying the adhesive material onto the object while allowing a strong external force to be exerted on the (micro)capsules 1 thus fixed to crush them thereby releasing the moisture-curing adhesive 3 to the outside when performing bonding.

Since the first and second adhesive material applicators A1 and AA1 each comprise the main body A2,AA2 having the container room A2s,AA2s for containing the adhesive material therein, and the nozzle A4,AA4 for delivering the adhesive material B by portions from the container room A2s,AA2s to the outside, it is possible to realize embodiments which are each capable of delivering a small amount of the adhesive material B directly to a bonding point from the nozzles A4,AA4, the adhesive material B having the moisture-curing adhesive 3 encapsulated in each (micro)capsule 1, and the tackiness agent coat 4 formed over the outer surface of the (micro)capsule 1. Thus, the adhesive material B can be used to bond minute portions.

Since the adhesive material applicators A1 and AA1 are each further provided with the refill A3,AA3 charged with the adhesive material B for refilling the container room A2s,AA2s and removably attached to the main body A2,AA2, only the refill A3,A.A3 has to be replaced when the adhesive material B contained in the container room A2s,AA2s has run out, whereas other parts can be used continuously without the need for disposal. Therefore, each of the adhesive material applicators A1 and AA1 can minimize waste produced when the adhesive material B contained in the container room A2s,AA2s has run out.

Since the adhesive material applicators A1 and AA1 each further comprise the pair of tweezers A5,AA5 having the pinching portion capable of pinching an object of bonding and the pressing surface A52s,AA52s provided at the base end of the pinching portion for pressing against the object of bonding, the pair of tweezers A5,AA5 being mountable on the outer peripheral surface of the main body A2,AA2, it is possible to pinch one object of bonding and press it against the other object of bonding by the pinching portion of the pair of tweezers A5,AA5, as well as to press one object of bonding against the other object of bonding by the pressing surface A52a,AA52a of the pair of tweezers A5,AA5. Thus, the adhesive material applicators A1 and AA1 each allow a bonding operation to be performed more effectively Moreover, the pair of tweezers A5,AA5 and the main body A2,AA2 can be handled as one piece when the pair of tweezers A5,AA5 is mounted on the main body A2,AA2, whereby the pair of tweezers A5,AA5 can be prevented from being lost.

Since the second adhesive material applicator AA1 has the delivery limiting roller AA41 provided at the tip of the nozzle AA4 for controlling the delivery of the adhesive material B, the delivery of the adhesive material B can be limited more effectively.

When use is made of the transfer sheet ST characterized by comprising the sheet-shaped release base ST1 comprising paper or film, and the adhesive material B applied onto the release base ST1, application of the adhesive material B can be achieved using the third adhesive material applicator AB1 which is a well-known transfer device.

The adhesive material according to the present invention is not limited to that according to the first embodiment described above. A second embodiment of the present invention will be described as an example with reference to the drawings. Like names and reference characters are used to designate like or corresponding parts throughout the first and second embodiments.

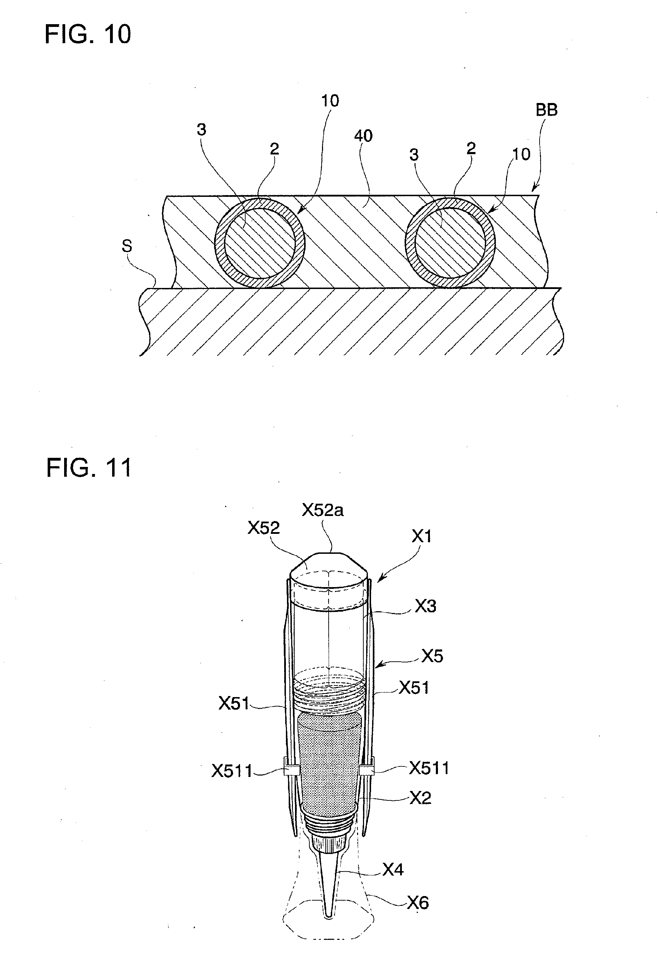

As illustrated in the sectional view in FIG. 10, an adhesive material BB according to the present embodiment comprises a plurality of (micro)capsules 10 each including: the waterproof outer wall 2 capable of being crushed by an external force; and the moisture-curing adhesive 3 encapsulated with the outer wall 2, the plurality of (micro)capsules 1 being dispersed in a tackiness agent 40. When objects of bonding in a state in which one object S is applied with the adhesive material BB while the other object is placed over the adhesive material are brought into pressure contact with each other, the adhesive material BB exercises the function of bonding the objects to each other by allowing the outer wall to be crushed to release the moisture-curing adhesive 3, as in the first embodiment.

More specifically, the (micro)capsules 10 are prepared by encapsulating the moisture-curing adhesive 3 with the outer wall 2 by a suitable one of various microcapsule preparation methods including the interfacial polymerization method. Examples of processes for encapsulating the moisture-curing adhesive 3 with the outer wall 2 include drying in liquid, interfacial polymerization, and in situ polymerization.

The material of the outer wall 2 has to be a material which is impermeable to water molecules and incompatible with the moisture-curing adhesive 3 and fails to chemically react with the moisture-curing adhesive 3. Examples of such materials include hydrophobic natural or synthetic polymer waxes, and inorganic compounds. Further, the material forming the outer wall 2 is desirably a material which fails to form pores or forms only very small pores each having a smaller size than a water molecule when formed into a film. The thickness dimension of the outer wall 2 has to be set such that the outer wall 2 is crushed when subjected to an external force of not less than the predetermined main bond threshold value Z1. Here, the main bond threshold value Z1 is set to fall within a range from a value of not less than 10 N/cm² to a value of less than 150 N/cm², more preferably from a value of not less than 20 N/cm² to a value of less than 100 N/cm². The value of 10 N/cm² is determined in view of a pressure exerted on each (micro)capsule 10 in provisionally positioning objects of bonding relative to each other by applying the adhesive material B onto one object and placing the other object thereon. On the other hand, the value of 150 N/cm² is determined in view of a practical upper limit of pressure exerted on the objects of bonding during an operation of pressing the objects against each other. The thickness dimension of the outer wall 2 is set such that any one of the (micro)capsules 10 is not crushed by an external force of not more than the predetermined provisional bond threshold value Z2. The provisional bond threshold value Z2 is not more than a smaller one of a value of 50 N/cm² and the main bond threshold value Z1, more preferably not more than 20 N/cm². When the main bond threshold value Z1 is set to fall within the range from a value of not less than 20 N/cm² to a value of less than 100 N/cm², ease of design of the outer wall 2 and ease of use can be easily made compatible with each other. Particularly when the main bond threshold value Z1 is not less than a value twice as large as the provisional bond threshold value Z2, more preferably, not less than a value 2.5 times as large as the provisional bond threshold value Z2 and less than a value 6 times as large as the provisional bond threshold value Z2, the ease of design of the outer wall 2 and the ease of use can be easily made compatible with each other, while the practicality of the adhesive material can be enhanced.

As the moisture-curing adhesive 3, a cyanoacrylate adhesive well-known as an instant adhesive or a like adhesive can be mentioned.

Examples of suitable materials for the tackiness agent 40 in which the (micro)capsules 10 are dispersed include rubber tackiness agents, acrylic tackiness agents, urethane tackiness agents, silicone tackiness agents, and vinyl ether tackiness agents.

As in the first embodiment, each (micro)capsule 10 has an outer diameter set to a value of not less than 2 µm and less than 3,000 µm, more preferably not less than 5 µm and less than 1,000 µm. Here, the outer diameter of each (micro)capsule 10 is set to fall within such a range because if the outer diameter is less than 2 µm, the outer wall 2 fails to be crushed even when subjected to an external force of not less than 150 N/cm², with the result that the moisture-curing adhesive 3 fails to be released without serving its purpose, while, on the other hand, if the outer diameter is more than 3,000 µm, an inconvenience may arise that the outer wall 2 is crushed to release the moisture-curing adhesive 3 undesirably during application of the (micro)capsules 10 at an external force of not more than 10 N/cm².

Application of this adhesive material is performed using a fourth or fifth adhesive material applicator X1 or XX1 to be described below.

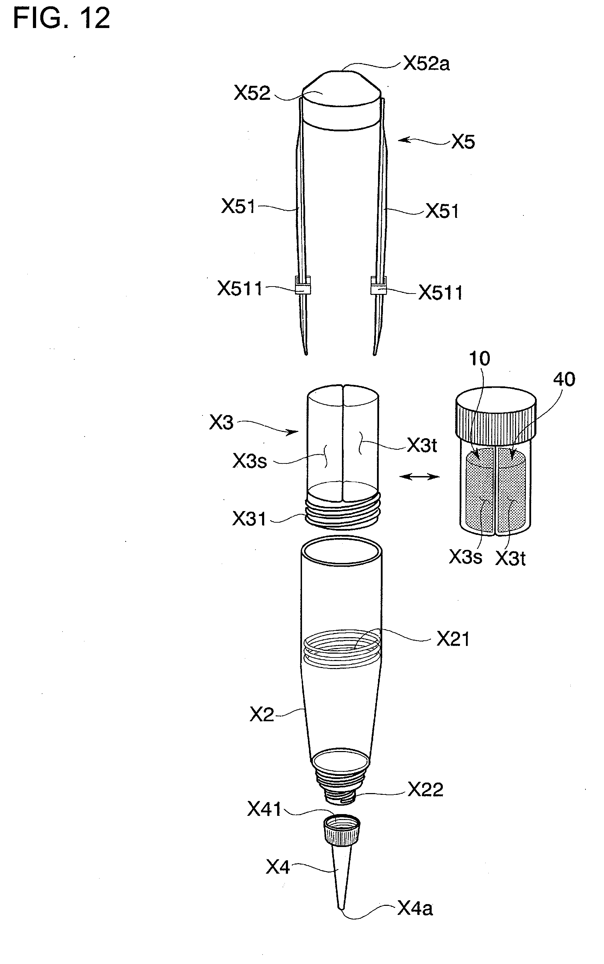

As illustrated in the general perspective view and the exploded perspective view in FIGs. 11 and 12, respectively, the fourth adhesive material applicator X1 comprises: a main body X2; a refill X3 removably attached to a base portion of the main body X2; a nozzle X4 removably attached to a tip portion of the main body X2; and a pair of tweezers X5 which can fitted over the main body X2 and has a pressing surface X52a at a base end portion thereof.

In the present embodiment, the main body X2 is tubular-shaped and provided with an adhesive material container room X2s for containing the adhesive material BB therein. The main body X2 has a longitudinally intermediate portion provided with an internal thread portion X21 which is threadingly engageable with an external thread portion X31 provided on the refill X3, and a near tip portion provided with an internal thread portion X4 which is threadingly engageable with an external thread portion X41 provided on the nozzle X4.

In the present embodiment, the refill X3 has a bottomed tubular shape and is provided with a microcapsule container room X3s containing (micro)capsules 10 therein and a tackiness liquid container room X3t containing the tackiness agent 40 therein. The refill X3 has a tip portion provided with the external thread portion X31 which is threadingly engageable with the internal thread portion X21 provided on the main body X2. When the refill X3 is fitted on the main body X2, the tip portion of the refill X3 is fitted into the main body X2, while the microcapsule container room X3s and tackiness liquid container room X3t of the refill X3 come to communicate with the adhesive material container room X2s of the main body X2. Thus, the (micro)capsules 10 and the tackiness agent 40 are mixed with each other in the adhesive material container room X2s to form the adhesive material BB.

In the present embodiment, the nozzle X4 has a substantially conical shape with its sectional area decreasing as the nozzle X4 extends toward its tip. The tip of the nozzle X4 defines an adhesive material delivery hole X4a for delivering the adhesive material BB. When not in use, the nozzle X4 is covered with a cap X6.

The pair of tweezers X5 has a pinching portion formed by joining a pair of pinching elements X51 together at a base end portion, and a pressing portion X52 covering the base end side of the pinching portion and having a pressing surface X52a. Each of the pinching elements X51 forming the pinching portion of the pair of tweezers X5 has a fitting piece X511 for engagement with an outer peripheral surface of the main body X2. With the pair of tweezers X5 in a position in which the fitting pieces X511 are in engagement with the outer peripheral surface of the main body X2 while a surface of the pressing portion X52 which is opposite away from the pressing surface X52a is abutting against or covering the base end side of the refill X3, the pair of tweezers X5 can be mounted on the main body X2.

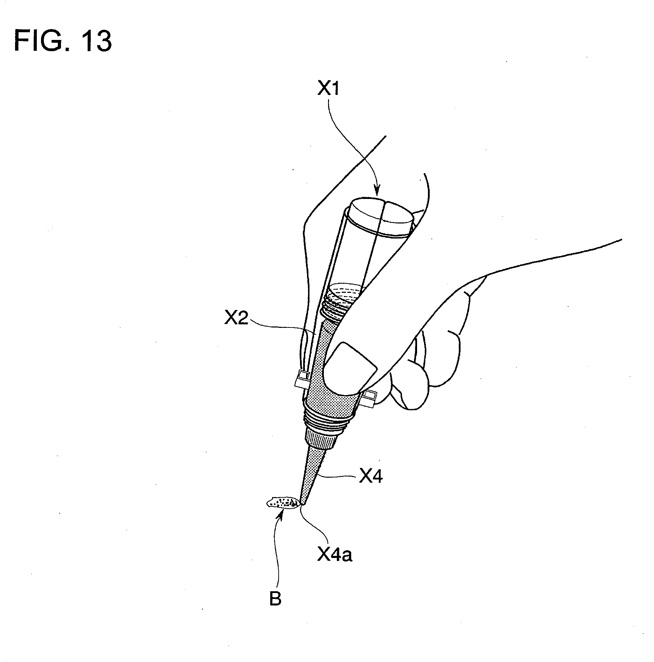

In applying the adhesive material BB onto objects S of bonding with use of the fourth adhesive material applicator X1, the adhesive material delivery hole X4a at the tip of the nozzle X4 is brought dose to one object S and then the main body X2 is compressed, as illustrated in FIG. 13. By so doing, the adhesive material BB in which the (micro)capsules 10 and the tackiness agent 40 are mixed together is delivered out of the container room X2s. At that time, the position of each of the (micro)capsules 10 relative to one object S is provisionally fixed as it is by the tackiness agent 40. Thereafter, if one of the objects S of bonding is small to such an extent as can be pinched by the pinching portion of the pair of tweezers X5, the pair of tweezers X5 is removed from the main body X2 to pinch the small object S by the pinching portion and then the small object is pressed against the other object S. If both the objects S of bonding are large to such an extent as cannot be pinched by the pinching portion of the pair of tweezers A5, the adhesive material BB is placed between one object S and the other object S and then the pressing surface X52a of the pair of tweezers X5 is abutted against one object S and pressed toward the other object S. At that time, a strong external force that is not less than the predetermined threshold value Z1 is exerted on each (micro)capsule 10 to crush the outer wall 2, thereby causing the moisture-curing adhesive 3 to be released. With lapse of several minutes, the moisture-curing adhesive 3 is cured in the presence of water (i.e., moisture) contained in air as a catalyst to bond the two objects S to each other.

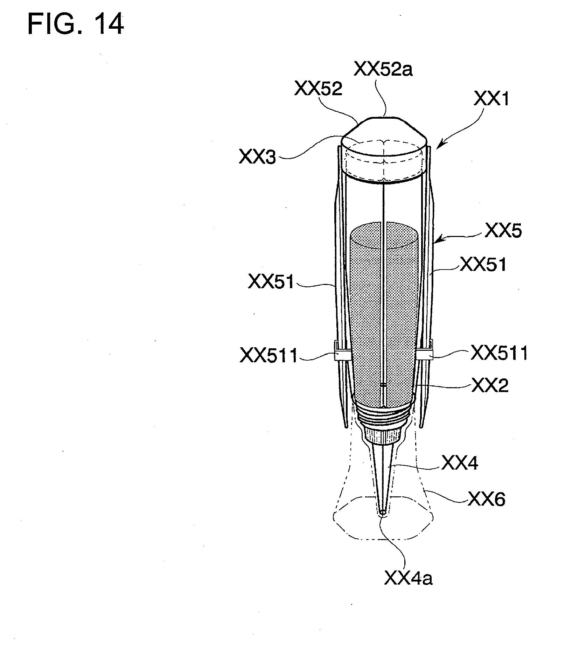

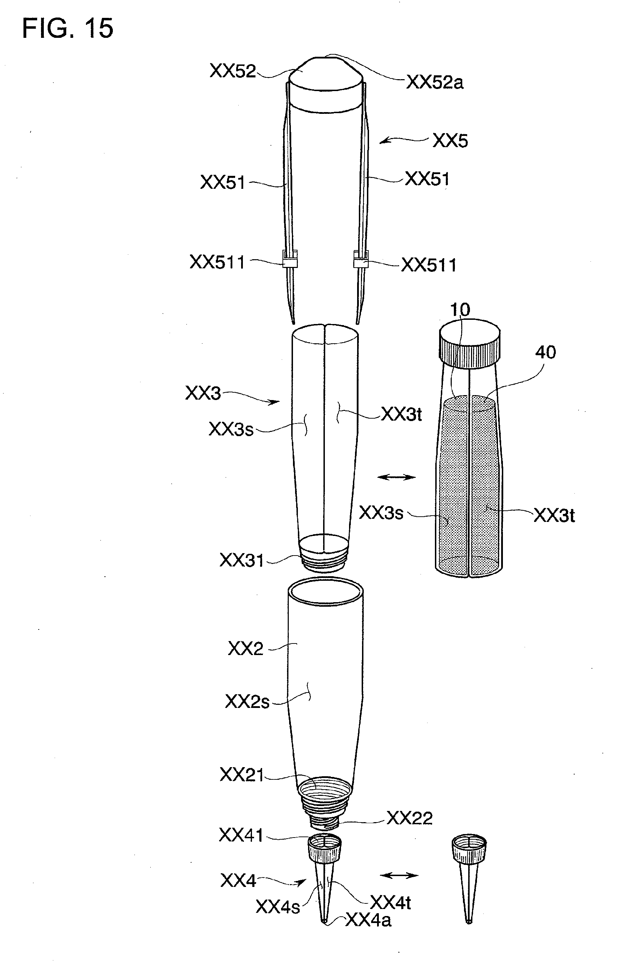

As illustrated in the general perspective view and the exploded perspective view in FIGs. 14 and 15, respectively, the fifth adhesive material applicator XX1 comprises: a main body XX2; a refill XX3 removably attached to a base portion of the main body XX2; a nozzle XX4 fixedly attached to a tip portion of the main body XX2; and a pair of tweezers XX5 which can be fitted over the main body XX2 and has a pressing surface XX52a at a base end portion thereof.

In the present embodiment, the main body XX2 is tubular-shaped and provided with a refill container room XX2s capable of accommodating the refill XX3 therein. The main body XX2 has an internal near tip portion provided with an internal thread portion XX21 which is threadingly engageable with an external thread portion XX31 provided on the refill XX3, and an external near tip portion provided with an internal thread portion XX22 which is threadingly engageable with an external thread portion XX41 provided on the nozzle X7C4.

In the present embodiment, the refill XX3 has a bottomed tubular shape and is provided with a microcapsule container room XX3s containing (micro)capsules 10 therein and a tackiness liquid container room XX3t containing the tackiness agent 40 therein. The refill XX3 has a tip portion provided with the external thread portion XX31 which is threadingly engageable with the internal thread portion XX21 provided on the main body XX2. The refill XX3 is configured to be substantially wholly accommodated into the refill container room XX2s of the main body XX2 when the refill XX3 is fitted on the main body XX2.

In the present embodiment, the nozzle XX4 has a substantially conical shape with its sectional area decreasing as the nozzle XX4 extends toward its tip. The tip of the nozzle XX4 defines an adhesive material delivery hole XX4a for delivering the adhesive material BB. The nozzle XX4 has a partition wall dividing the internal space thereof into a microcapsule delivery portion XX4s for communication with the microcapsule container room XX3s of the refill XX3 and a tackiness liquid delivery portion XX4s for communication with the tackiness liquid container room XX3t of the refill XX3 and is configured to mix the (micro)capsules 10 and the tackiness agent 40 together at the adhesive material delivery hole XX4a. When not in use, the nozzle XX4 is covered with a cap XX6.

The pair of tweezers XX5 is substantially similar to that of the above-described fourth adhesive material applicator X1. However, the fifth adhesive applicator XX1, as a whole, has an outer diameter and a longitudinal dimension which are substantially equal to the corresponding dimensions of a writing pen of the type widely put on the market.

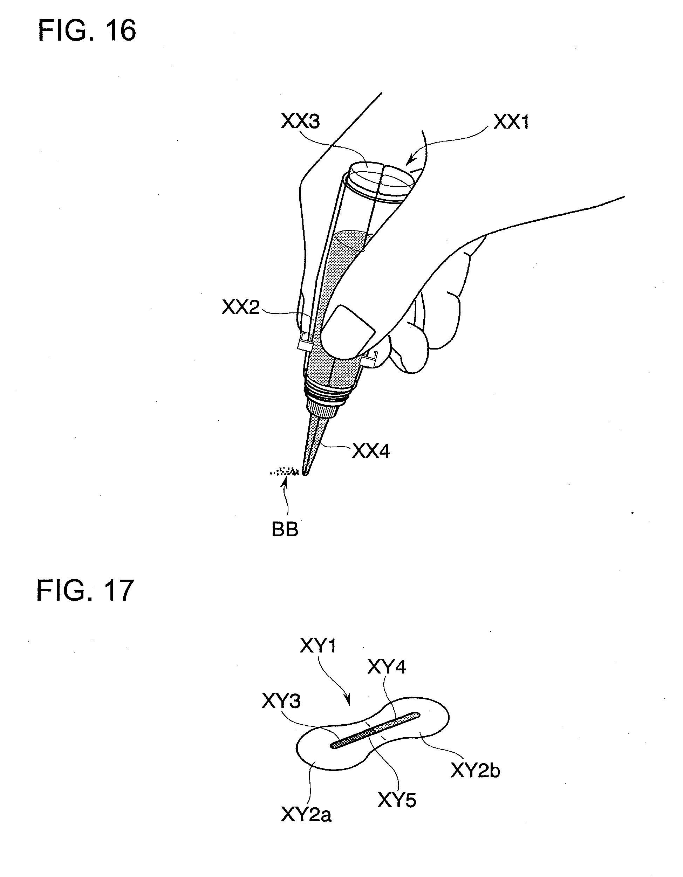

The operation of applying the adhesive material BB onto objects S of bonding with use of the fifth adhesive material applicator XX1 is the same as the operation of applying the adhesive material onto the objects S of bonding with use of the fourth adhesive material applicator X1. Specifically, the adhesive material delivery hole XX4a at the tip of the nozzle XX4 is brought dose to one object S and then the main body XX2 is compressed, as illustrated in FIG. 16. By so doing, the (micro)capsules 10 and the tackiness agent 40 are pushed out of the microcapsule container room XX3s and the tackiness liquid container room SS3t, respectively, toward the adhesive material delivery hole XX4a. Then, the adhesive material BB resulting from mixing of the (micro)capsules 10 and the tackiness agent 40 together at the adhesive material delivery hole XX4a is delivered out of the nozzle XX4. At that time, the position of each of the (micro)capsules 10 relative to one object S is provisionally fixed as it is by the tackiness agent 40. Thereafter, if one of the objects S of bonding is small to such an extent as can be pinched by the pinching portion of the pair of tweezers XX5, the pair of tweezers XX5 is removed from the main body XX2 to pinch the small object S by the pinching portion and then the small object is pressed against the other object S. If both the objects S of bonding are large to such an extent as cannot be pinched by the pinching portion of the pair of tweezers XX5, the adhesive material BB is placed between one object S and the other object S and then the pressing surface XX52a of the pair of tweezers XX5 is abutted against one object S and pressed toward the other object S. By so doing, a strong external force that is not less than the predetermined threshold value Z1 is exerted on each (micro)capsule 10 to crush the outer wall 2, thereby causing the moisture-curing adhesive 3 to be released. With lapse of several minutes, the moisture-curing adhesive 3 is cured in the presence of water (i.e., moisture) contained in air as a catalyst to bond the two objects S to each other.

The adhesive material BB may be applied to objects S of bonding with use of a sixth adhesive material applicator X2 containing the adhesive material BB.

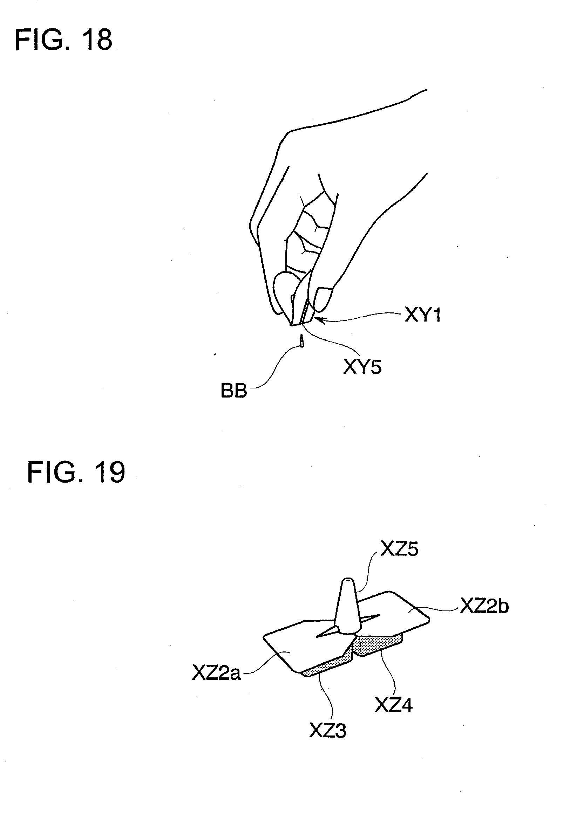

As illustrated in FIG. 17, the sixth adhesive material applicator X2 comprises: a pair of flaps X300a and X300b foldably joined to each other by means of a hinge portion; a deformable capsule container portion XY3 containing the (micro)capsules 10 therein which is provided on one flap X300a; a deformable tackiness liquid container portion XY4 containing the tackiness agent 40 therein which is provided on the other flap X300b; and an opening portiomXY5 serving as a nozzle when the capsule container portion XY3 and the tackiness liquid container portion XY4 are compressed by an operation of folding the flaps X300a and X300b toward each other. The sixth adhesive material applicator X2 is configured to join the (micro)capsules 10 pushed out of the capsule container portion XY3 and the tackiness agent 40 pushed out of the tackiness liquid container portion XY4 together and then deliver the resulting mixture from the opening portion XY5 to the outside, as illustrated in FIG. 18.

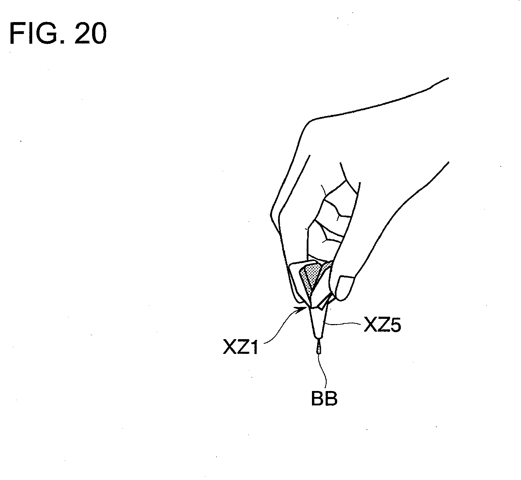

Variations of the sixth adhesive material applicator X2 include a seventh adhesive material applicator XZ1 to be described below. As illustrated in FIG. 19, the seventh adhesive material applicator XZ1 comprises: a pair of flaps XZ2a and XZ2b foldably joined to each other by means of a hinge portion; a deformable capsule container portion XZ3 containing the (micro)capsules 10 therein which is provided on one flap XZ2a; a deformable tackiness liquid container portion XZ4 containing the tackiness agent 40 therein which is provided on the other flap XZ2b; and a nozzle XZ5 extending back from a substantially central portion of the hinge portion. When the capsule container portion XZ3 and the tackiness liquid container portion XZ4 are compressed by the operation of folding the flaps XZ2a and XZ2b toward each other, the sixth adhesive material applicator XZ1 joins the (micro)capsules 10 pushed out of the capsule container portion XZ3 and the tackiness agent 40 pushed out of the tackiness liquid container portion XZ4 together and then deliver the resulting mixture as the adhesive material BB to the outside, as illustrated in FIG. 20.

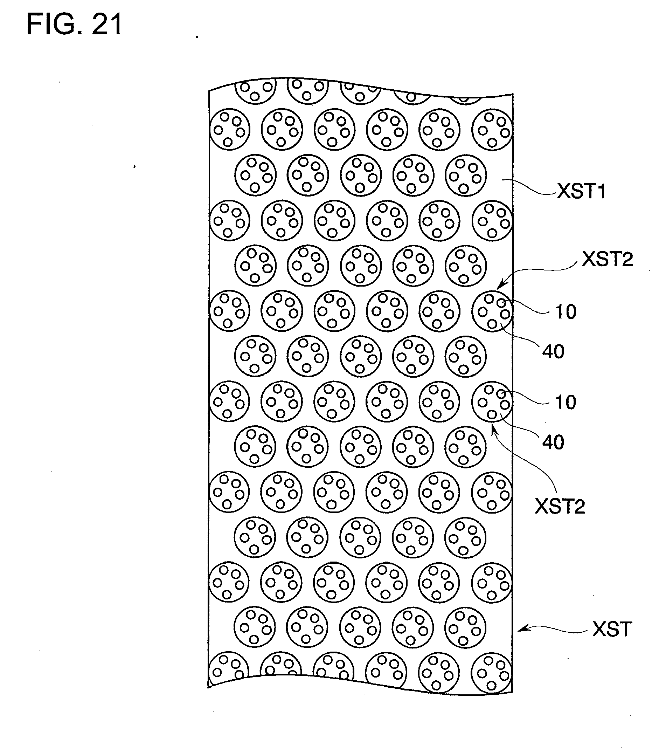

It is possible that: a transfer sheet XST as illustrated in FIG. 21 is provided in which the tackiness agent 40 is applied onto a dotted tackiness liquid application region while a plurality of (micro)capsules 10 are dispersed in the tackiness liquid application region; and the transfer sheet is placed in the third adhesive material applicator AB1 according to the foregoing first embodiment for application of the adhesive material BB. In this case, the outer diameter of each (micro)capsule 10 has to be not less than 2 µm and less than 300 µm, more desirably not less than 5 µm and less than 100 µm. This is because the outer diameter of each (micro)capsule 10 has to be not more than the coating thickness of the tackiness agent 40 which is not more than 300 µm, more desirably not more than 100 µm for the (micro)capsules 10 to be dispersed in the tackiness agent 40.

Since the above-described adhesive material BB has the arrangement wherein the moisture-curing adhesive 3 is encapsulated with the outer wall 2 of each (micro)capsule 10, the adhesive material BB allows the adhesive to be polymerized and cured quickly thereby shortening the time required for objects of bonding to be bonded to each other as compared with the arrangement described in patent document 1 and is capable of distributing the moisture-curing adhesive 3 more uniformly than the arrangement described in patent document 2. Further, since the moisture-curing adhesive 3 is shielded from water contained in air by the waterproof outer wall 2, the moisture-curing adhesive 3 can be stored for a longer period of time than a common moisture-curing adhesive. In addition, though a cyanoacrylate adhesive used as the moisture-curing adhesive 3, in particular, has a peculiar strong smell which sometimes makes the user unpleasant during use, the adhesive material BB in which such a cyanoacrylate adhesive is encapsulated with the outer wall 2 can suppress emission of such a smell. Since the cyanoacrylate adhesive can be polymerized and cured quickly, specifically, in several minutes in the presence of water (i.e., moisture) contained in air as a catalyst, the time required for the objects of bonding to be bonded to each other can be advantageously shortened.

Since the adhesive material BB employs the arrangement comprising the plurality of (micro)capsules 10 each including: the waterproof outer wall 2 capable of being crushed by the external force and the moisture-curing adhesive 3 encapsulated with the outer wall 2, the plurality of (micro)capsules 10 being dispersed in the tackiness agent 40, it is possible to fix each (micro)capsule 10 onto an object of bonding by means of the tackiness agent 40, thereby to position each(micro)capsule 10 relative to the object.

Since the outer wall 2 has a strength set so as not to allow any one of the (micro)capsules 10 to be crushed by an external force of not more than 20 N/cm² but allow most of the (micro)capsules 1 to be crushed by an external force that is not less than the predetermined threshold value Z1 (20 N/cm²≦Z1<100 N/cm²), it is possible to realize an embodiment which is capable of fixing the (micro)capsules 10 onto an object of bonding without crushing the (micro)capsules 10 when applying the adhesive material onto the object while allowing a strong external force to be exerted on the (micro)capsules 10 thus fixed to crush them thereby releasing the moisture-curing adhesive 3 to the outside when performing bonding.

Since the fourth and fifth adhesive material applicators X1 and XX1 each comprise: the main body X2,XX2 capable of internally defining the microcapsule container room X3s,XX3s for containing the (micro)capsules 10 and the tackiness liquid container room X3t,XX3t for containing the tackiness agent 40; and the nozzle X4,XX4 for delivering the adhesive material BB by portions to the outside, the adhesive material BB comprising the (micro)capsules 10 and the tackiness agent 40 which are contained in the respective container rooms, it is possible to realize embodiments which are each capable of delivering a small amount of the adhesive material BB resulting from mixing of the (micro)capsules 10 and the tackiness agent 40 together directly to a bonding point from the nozzle X4,XX4. Thus, the adhesive material BB can be used to bond minute portions.

Since the adhesive material applicators X1 and XX1 are each further provided with the refill X3,XX3 charged with the (micro)capsules 10 for refilling the (micro)capsule container room X3s,XX3s and the tackiness agent 40 for refilling the tackiness liquid container room X3t,XX3t and removably attached to the main body X2,XX2, only the refill X3,XX3 has to be replaced when the (micro)capsules 10 contained in the (micro)capsule container room X3s,XX3s and the tackiness agent 40 contained in the tackiness liquid container room X3t,XX3t have run out, whereas other parts can be used continuously without the need for disposal. Therefore, each of the adhesive material applicators X1 and XX1 can minimize waste produced when the (micro)capsules 10 contained in the container room X3s,XX3s and the tackiness agent 40 contained in the container room X3t,XX3t have run out.

The adhesive material applicators X1 and XX1 each further comprise the pair of tweezers X5,XX5 having the pinching portion capable of pinching an object S of bonding and the pressing surface X52a,XX52a provided at the base end of the pinching portion for pressing against the object S, the pair of tweezers X5,XX5 being mountable on the outer peripheral surface of the main body X2,XX2. Therefore, it is possible to pinch one object S of bonding and press it against the other object of bonding by the pinching portion of the pair of tweezers X5,XX5, as well as to press one object S against the other object S by the pressing surface X52a,XX52a of the pair of tweezers X5,XX5. Thus, the adhesive material applicators X1 and XX1 each allow a bonding operation to be performed more effectively. Moreover, the pair of tweezers X5,XX5 and the main body X2,XX2 can be handled as one piece when the pair of tweezers X5,XX5 is mounted on the main body X2,XX2, whereby the pair of tweezers X5,XX5 can be prevented from being lost.

On the other hand, the use of the arrangement of the sixth or seventh adhesive material applicator X2 or XZ1 makes it possible to effectively prevent excessive use of the adhesive material BB by charging the capsule container portion XY3,XZ3 and the tackiness liquid container portion XY4,XZ4 with the (micro)capsules 10 and the tackiness agent 40, respectively, in amounts for one-time application.

When use is made of a transfer sheet characterized by comprising a sheet-shaped release base comprising paper or film, and the adhesive material BB applied onto the release base, application of the adhesive material BB can be achieved using the third adhesive material applicator, i.e., the well-known transfer device.

A third embodiment of the present invention as another example of the adhesive material according to the present invention will be described with reference to the drawings. Like names and reference characters are used to designate like or corresponding parts throughout the first and third embodiments.

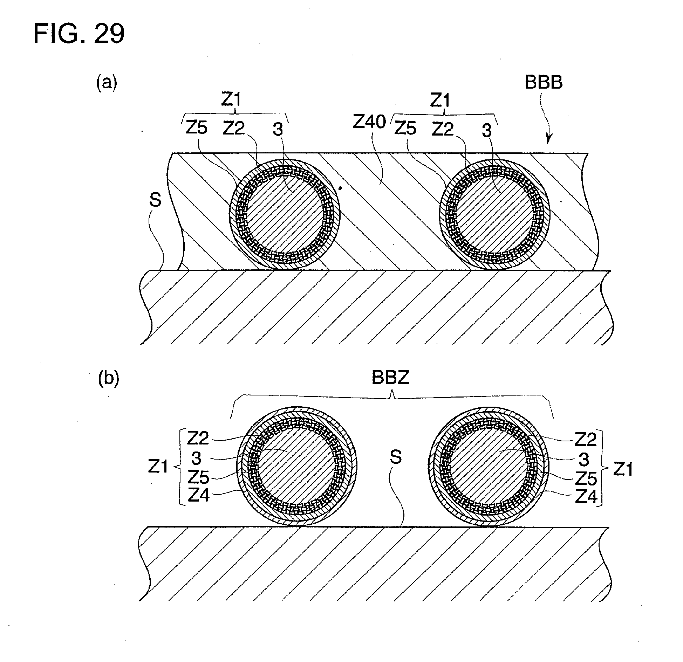

As illustrated in FIG. 29(a), an adhesive material BBB according to the present embodiment comprises a plurality of (micro)capsules Z1 each including: a porous particle Z2, moisture-curing adhesive 3 contained in a hollow of the porous particle Z2, and a coating layer Z5 covering pores which are present on a surface of the porous particle Z2, the plurality of (micro)capsules Z1 being dispersed in a tackiness agent Z40. When objects S of bonding in a state in which the adhesive material BBB is applied onto one object S while the other object is placed over the adhesive material are brought into pressure contact with each other, the adhesive material BBB exercises the function of bonding the objects to each other by allowing the porous particle Z2 to be crushed to release the moisture-curing adhesive 3.

More specifically, the (micro)capsules Z1 are prepared by allowing the moisture-curing adhesive 3 to be contained in the hollow of the porous particle Z2. Possible processes for preparing the (micro)capsules Z1 by allowing the moisture-curing adhesive 3 to be contained in the hollow of the porous particle Z2, include for example a method including allowing the moisture-curing adhesive 3 to be contained in the porous particle Z2 under a vacuum atmosphere and then forming the coating layer Z5 over the exterior of the porous particle Z2 under a vacuum atmosphere.

The material of the porous particle Z2 has to be a material which is impermeable to water molecules and incompatible with the moisture-curing adhesive 3 and fails to chemically react with the moisture-curing adhesive 3. Examples of such materials which can be suitably used include inorganic compounds. More specifically, use of an inorganic porous silica (trade name: GOD BALL) is preferable. The porous particle Z2 may be formed using other material, examples of which include carbonates, silicates, phosphates and sulfates of alkaline earth metals, metal oxides, metal hydroxides, and metal silicates and metal carbonates of other materials. Alternatively, the porous particle Z2 may be forming using an organic polymer compound. Though pores of the porous particle Z2 are regularly arranged in FIG. 29, actually such pores are irregularly arranged and pores and solid portions are present in a mixed fashion throughout the entire porous particle Z2 from a portion adjacent the surface to a central portion.

As the moisture-curing adhesive 3, a cyanoacrylate adhesive well-known as an instant adhesive or a like adhesive can be mentioned.

Examples of suitable materials for the tackiness agent Z40 for dispersing the (micro)capsules Z1 therein include rubber tackiness agents, acrylic tackiness agents, urethane tackiness agents, silicone tackiness agents, and vinyl ether tackiness agents, as in the second embodiment.

As in the first embodiment, the outer diameter of each (micro)capsule Z1 is set to a value of not less than 2 µm and less than 3,000 µm, more preferably not less than 5 µm and less than 1,000 µm.

Such an adhesive material can be applied to objects of bonding with use of any one of the above-described fourth, fifth and sixth adhesive material applicators.

This adhesive material BBB, which has the arrangement wherein the moisture-curing adhesive 3 is contained in the hollow of the porous particle Z2, is capable of being applied onto a minute portion while allowing the adhesive to be polymerized and cured quickly thereby shortening the time required for the objects of bonding to be bonded to each other as compared with the arrangement described in patent document 1 and allows the adhesive to be distributed more uniformly than the arrangement described in patent document 2.

Since the porous particle Z2 is formed from an inorganic material, the porous particle Z2 does not easily dissolve into the moisture-curing adhesive 3, so that the moisture-curing adhesive 3 can be stored more stably.

Further, since each (micro)capsule Z1 includes the coating layer Z5 covering pores which are present on the surface of the porous particle Z5, it is possible to prevent moisture contained in air from reaching the moisture-curing adhesive 3 contained in the hollow of the porous particle Z2 through the coating layer Z5. That is, the coating layer Z5 can shield the moisture-curing adhesive 3 from water contained in air thereby making it possible to store the moisture-curing adhesive 3 for a longer period of time. The moisture-curing adhesive 3, which is a cyanoacrylate adhesive, has a peculiar strong smell which sometimes makes the user unpleasant during use. The coating layer Z5 covering the pores on the surface of the porous particle Z2 can suppress emission of such a smell.

Since the plurality of (micro)capsules Z1 are dispersed in the tackiness agent Z40, the tackiness agent Z40 can fix each (micro)capsule Z1 onto an object of bonding thereby positioning each (micro)capsule Z1 relative to the object.

Instead of the arrangement of the adhesive material BBB in which the plurality of (micro)capsules Z1 are dispersed in the tackiness agent Z40, the arrangement of an adhesive material ZZB as illustrated in FIG. 29(b) may be employed which comprises as a major component a (micro)capsule Z1 including porous particle Z2, moisture-curing adhesive 3 contained in the hollow of the porous particle Z2, and coating layer Z5 covering pores which are present on a surface of the porous particle Z2, like each (micro)capsule of the above-described adhesive material BBB, the (micro)capsule Z1 further including a tackiness agent coat Z4 formed over an outer surface of the coating layer Z5 to form an outer surface of the (micro)capsule Z1. With this adhesive material ZZB, it is also possible to fix the (micro)capsule Z1 onto an object S of bonding by means of the tackiness agent coat Z4, thereby to position the (micro)capsule Z1 relative to the object S.

It should be noted that the present invention is not limited to any one of the foregoing embodiments.

For example, instead of forming the tackiness agent coat over the surface of the outer wall of each (micro)capsule or dispersing the (micro)capsules in the tackiness or adhesive agent, it is possible to form the outer wall itself from a material having tackiness, thereby to allow each (micro)capsule to be positioned by itself relative to an object of bonding. It is also possible that the moisture-curing adhesive is encapsulated in a (micro)capsule having a relatively large diameter of about 300 to about 3,000 µm; and such a (micro)capsule is placed at a bonding point on an object of bonding by utilizing pinching means such as a pair of tweezers.

It is possible to use smaller microcapsules or select a material, an outer wall thickness dimension or the like for the (micro)capsules in order for the adhesive material to be used in an embodiment such that the outer wall is not crushed until objects of bonding are pressed against each other with a strong force by using a machine or the like.

In the foregoing second embodiment, it is possible that: an adhesive agent is used instead of the tackiness agent; and the (micro)capsules are mixed with and dispersed in the adhesive agent when applying the adhesive material onto an object of bonding with use of any one of the fourth, fifth, sixth and seventh adhesive material applicators or a like applicator. A chemical reaction type adhesive agent, a synthetic rubber adhesive agent or the like can be suitably used as such an adhesive agent.

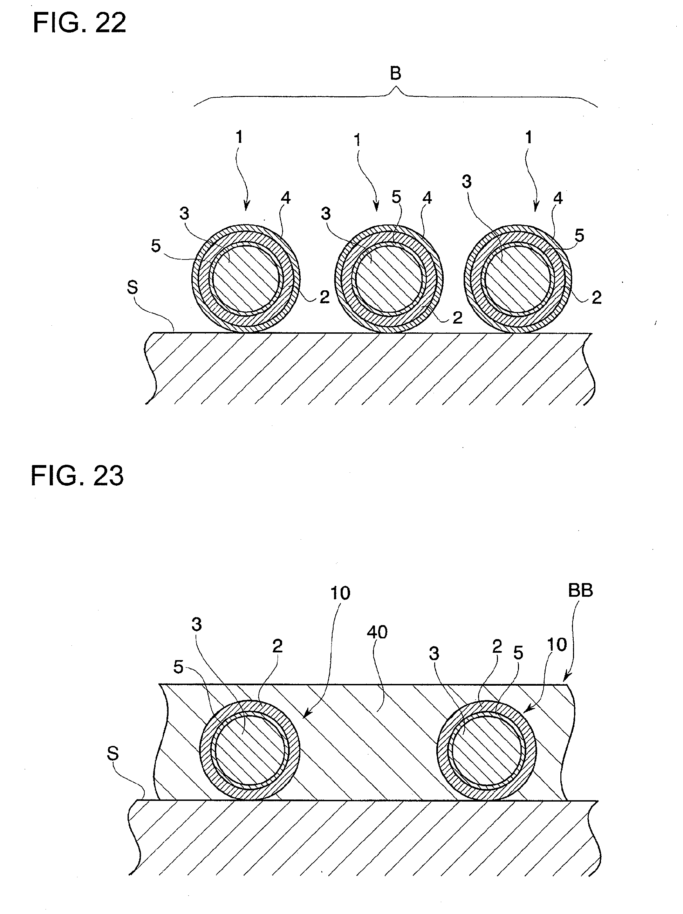

In the adhesive material B according to the foregoing first embodiment, instead of making the outer wall 2 of each (micro)capsule 1 fail to form pores or form only very small pores each having a smaller size than a water molecule, it is possible to provide coating layer 5 which has waterproofness and is impermeable to water molecules between the outer wall 2 and the moisture-curing adhesive 3 regardless of whether or not the outer wall 2 has pores, as illustrated in the sectional view in FIG. 22.

Likewise, in the adhesive material BB according to the second embodiment, instead of making the outer wall 2 of each (micro)capsule 1 fail to form pores or form only very small pores each having a smaller size than a water molecule, it is possible to form coating layer 5 which has waterproofness and is impermeable to water molecules between the outer wall 2 and the moisture-curing adhesive 3 regardless of whether or not the outer wall 2 has pores, as illustrated in the sectional view in FIG. 23.

Even when the outer wall 2 is an ordinary outer wall which is easy to crush but frequently has pores allowing water molecules to pass therethrough, the provision of the waterproof coating layer 5 between the outer wall 2 and the moisture-curing adhesive 3 can enhance the airtightness of the inner side of the coating layer 5 to prevent water (i.e., moisture) contained in air from reaching the moisture-curing adhesive 3, thereby making it possible to store the moisture-curing adhesive 3 for a longer period of time.

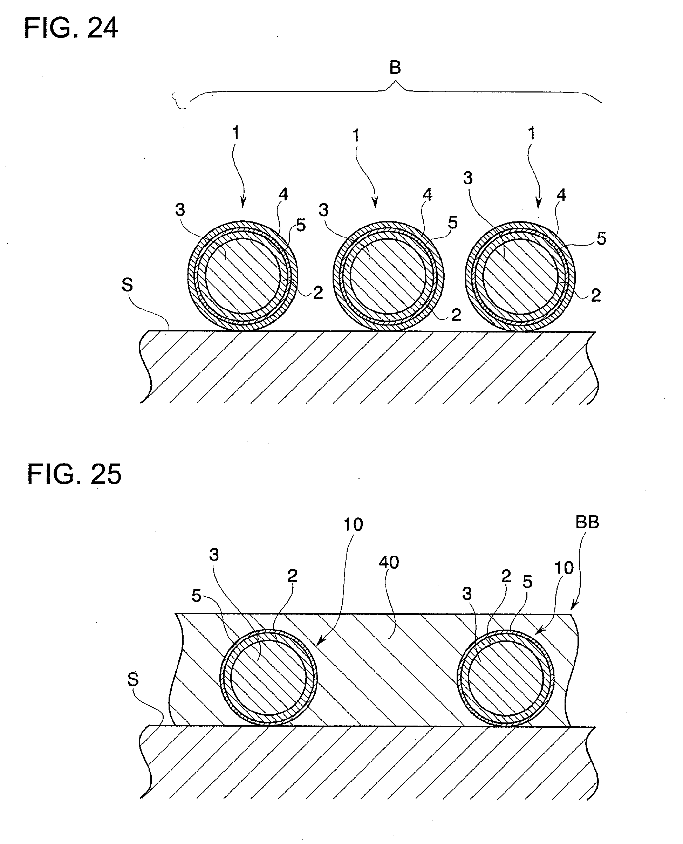

In the adhesive material B according to the foregoing first embodiment, instead of making the outer wall 2 of each (micro)capsule 1 fail to form pores or form only very small pores each having a smaller size than a water molecule, it is possible to form the coating layer 5 which has waterproofness and is impermeable to water molecules over the outer side of the outer wall 2 regardless of whether or not the outer wall 2 has pores, as illustrated in the sectional view in FIG. 24.

Likewise, in the adhesive material BB according to the foregoing second embodiment, instead of making the outer wall 2 of each (micro)capsule 10 fail to form pores or form only very small pores each having a smaller size than a water molecule, it is possible to form the coating layer 5 which has waterproofness and is impermeable to water molecules over the outer side of the outer wall 2 regardless of whether or not the outer wall 2 has pores, as illustrated in the sectional view in FIG. 25.

Even when the outer wall 2 is easy to crush but frequently has pores allowing water molecules to pass therethrough, the provision of the waterproof coating layer 5 formed over the outer side of the outer wall 2 can enhance the airtightness of the inner side of the coating layer 5. Therefore, it is possible to prevent water (i.e., moisture) contained in air from reaching the moisture-curing adhesive 3, thereby to store the moisture-curing adhesive 3 for a longer period of time.

It is possible that: the outer wall 2 is provided with a pore having a size that allows a functional material to be injected and extracted through the outer wall 2; and coating layer 5 is provided which covers only a portion around the pore. Even such an arrangement can exhibit at least the effect of preventing water (i.e., moisture) contained in air from reaching the inner side of the outer wall 2 through the pore.

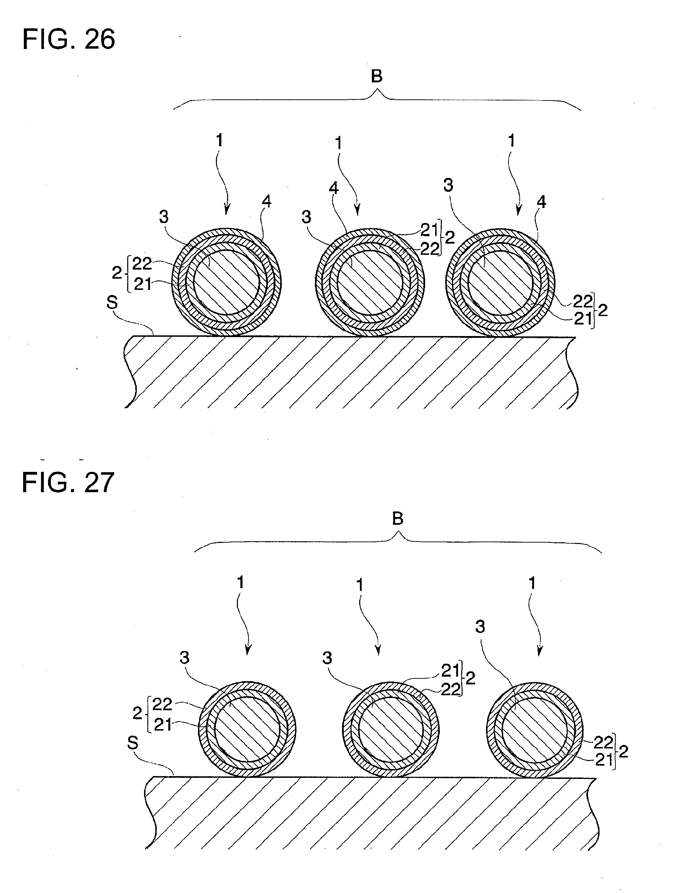

In the adhesive material B according to the foregoing first embodiment, a double capsule structure may be employed in which the outer wall 2 comprises two layers including: an outer wall inner layer 21 adjoining the moisture-curing adhesive 3; and an outer wall outer layer 22 adjoining the outside of the outer wall inner layer 21, as illustrated in the sectional view in FIG. 26. It is also possible that the tackiness agent coat 4 is eliminated while the outer wall outer layer 22 is formed from a tackiness agent, as illustrated in the sectional view in FIG. 27.

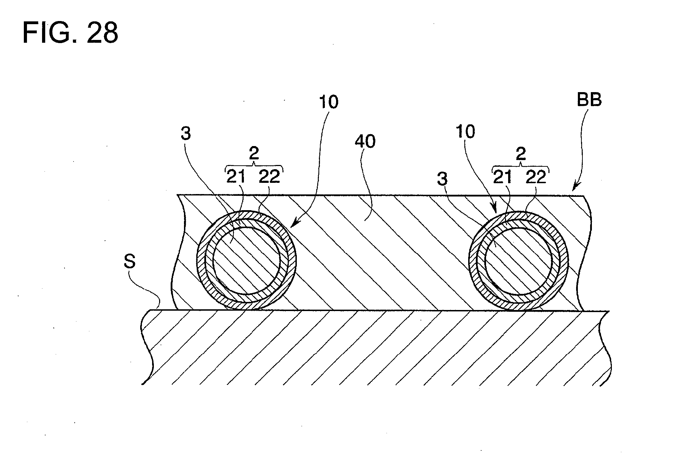

In the adhesive material BB according to the foregoing second embodiment, of course, a double capsule structure may be employed in which the outer wall 2 comprises two layers including: the outer wall inner layer 21 adjoining the moisture-curing adhesive 3; and the outer wall outer layer 22 adjoining the outside of the outer wall inner layer 21, as illustrated in the sectional view in FIG. 28.

With such a double capsule structure employed for the outer wall 2, even when a film of an organic or inorganic compound having pores is employed for each of the outer wall inner layer 21 and the outer wall outer layer 22, there is no possibility that water (i.e., moisture) contained in air reaches the moisture-curing adhesive 3 unless the pores of the outer wall inner layer 21 coincide with or overlap those of the outer wall outer layer 22. Therefore, it is possible to enhance the airtightness thereby to allow the moisture-curing adhesive 3 to be stored for a longer period of time. Particularly where the tackiness agent coat 4 is eliminated while the outer wall outer layer 22 is formed from the tackiness agent, it is possible to position the (micro)capsule relative to one object S of bonding when the outer wall outer layer 22 is brought into contact with the object, as well as to ensure required airtightness by the double capsule structure. Of course, a multi-capsule structure in which the outer wall 2 has three or more layers can exhibit such an effect.

A (micro)capsule may be employed having an arrangement in which the outer wall 2 is provided with: a pore having a size which allows the moisture-curing adhesive to be injected or released therethrough; and a coating layer covering the pore. That is, the (micro)capsule may be formed by injecting the moisture-curing adhesive through the pore and then covering the pore of the outer wall with the coating layer. The provision of such a coating layer makes it possible to prevent intrusion of water from a portion adjacent the pore by the coating layer or the outer wall. With such a (micro)capsule, the coating layer having a lower strength than the outer wall is broken to expose the pore when an external force is exerted on the capsule and, hence, the moisture-curing adhesive can be released without the need to crush the outer wall.

Any one of the adhesive materials according to the present invention may further comprise crush promoter particles for promoting crush of the capsules or microcapsules forming the adhesive material.

An adhesive material applicator may be provided with a crush promoter element which is a member for performing an action to promote crush of the capsules or microcapsules. That is, the adhesive material applicator may be provided with a member as the crush promoter element which is capable of performing the action to promote crush of the capsules or microcapsules, stated otherwise, an action to turn each capsule or microcapsule into a condition that allows a functional material to be released out of the capsule.

The following is an exemplary possible embodiment which uses an adhesive material provided with the crush promoter particles and an adhesive material applicator provided with the crush promoter element

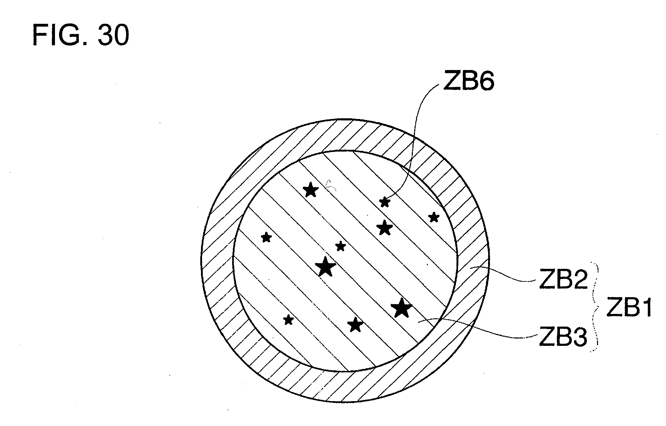

An adhesive material ZB according to this embodiment is substantially similar in arrangement to the adhesive material BB according to the foregoing second embodiment. That is, the adhesive material ZB comprises a plurality of (micro)capsules ZB1 each including: a waterproof outer wall ZB2 capable of being crushed by an external force; and a moisture-curing adhesive ZB3 encapsulated with the outer wall ZB2, the plurality of (micro)capsules ZB1 being dispersed in a tackiness agent ZB4. FIG. 30 is a sectional view illustrating such a (micro)capsule ZB1. The adhesive material ZB further comprises magnetic particles ZB6 as the crush promoter particles mixed in the moisture-curing adhesive 3 encapsulated in each (micro)capsule ZB1. The magnetic particles ZB6 are formed from a magnetic material having high rigidity. Like the adhesive material according to the foregoing second embodiment, the adhesive material ZB exercises the function of bonding objects S of bonding to each other by allowing the outer wall to be crushed to release the moisture-curing adhesive ZB3 when the objects in a state in which one object S is applied with the adhesive material ZB while the other object is placed over the adhesive material ZB are brought into pressure contact with each other.

On the other hand, an adhesive material applicator ZZ1 used for application of the adhesive material ZB comprises: a main body ZZ2; a refill ZZ3 removably attached to a base portion of the main body ZZ2; a nozzle ZZ4 fixedly attached to a tip portion of the main body ZZ2 and having a magnetic ball ZZ1 at a tip portion thereof; and a pair of tweezers ZZ5 which is removable from the main body ZZ2 and has a pressing surface ZZ52a at a base end portion thereof.

The main body ZZ2 and the refill ZZ3 are substantially similar in structure to the corresponding parts of the aforementioned fourth adhesive applicator. However, the adhesive material applicator ZZ1, as a whole, has an outer diameter and a longitudinal dimension which are substantially equal to the corresponding dimensions of a writing pen of the type widely put on the market

The nozzle ZZ4 has a substantially conical shape with its sectional area decreasing as the nozzle Z24 extends toward its tip. The tip of the nozzle ZZ4 defines an adhesive material delivery hole ZZ4a for delivering the adhesive material ZB. The magnetic ball ZZ41 is supported in the vicinity of the adhesive material delivery hole ZZ4a.

The magnetic ball ZZ41 is formed into a spherical shape from a magnetic material and located in the vicinity of the adhesive material delivery hole ZZ4a of the nozzle ZZ4 as described above. The magnetic ball ZZ41 attracts the (micro)capsules ZB1 by a magnetic force so as to cause the (micro)capsules ZB1 to be released to the outside reliably. The magnetic force of the magnetic ball ZZ41 is weak to such an extent as to allow the (micro)capsules ZB1 attracted thereby to be discharged from the adhesive material delivery hole ZZ4a.

The pair of tweezers ZZ5 has a magnet ZZ58 embedded in a base end portion thereof as the crush promoter element for performing an action to promote crush of the capsules ZB1. The pair of tweezers ZZ5 is provided with a shielding member ZZ59 for shielding against the magnetic force of the magnet ZZ58. When the pair of tweezers ZZ5 is mounted on the bottom portion of the refill ZZ3, i.e., main body ZZ2, the shielding member ZZ5 is located at an end opposite away from the magnetic ball so as to be spaced from the magnet ZZ58. The magnetic force of the magnet ZZ58 at a point spaced a unit distance therefrom is stronger than at least the magnetic force of the magnetic ball ZZ41 at a point spaced a unit distance therefrom. On the other hand, the shielding member ZZ59 is formed from a magnetic substance such as iron or a diamagnetic substance such as aluminum, so that the magnetic force from the magnetic ball ZZ41 is larger than that from the magnet ZZ58 within the refill ZZ3.

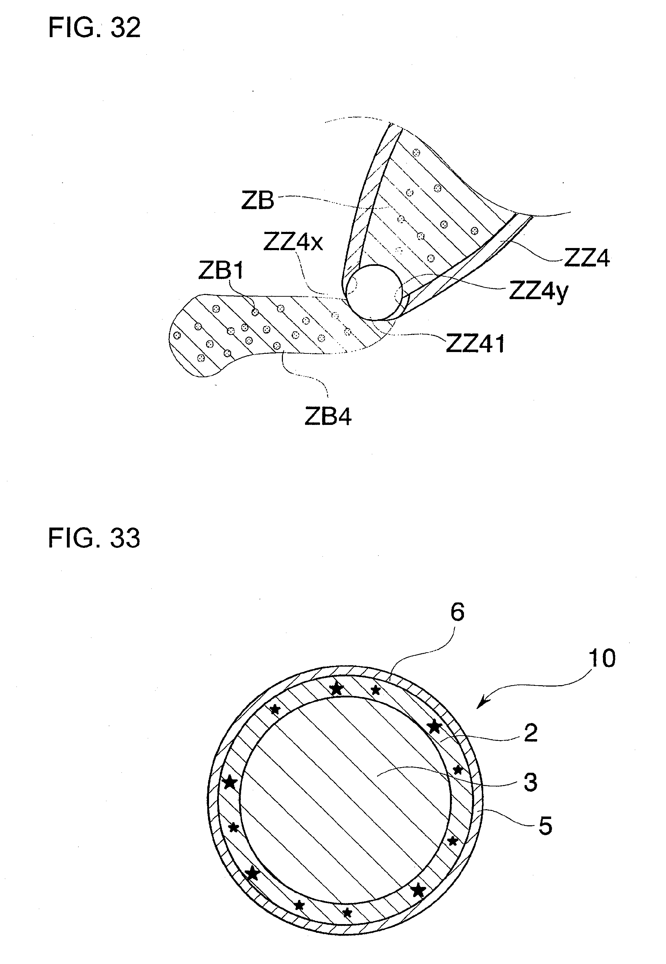

In applying the adhesive material ZB onto objects S of bonding with use of the adhesive material applicator ZZ1, the nozzle ZZ4 is brought dose to one object S and then the magnetic ball ZZ41 is rotated, as illustrated in FIG. 32. With rotation of the magnetic ball ZZ41, the adhesive material ZB, i.e., (micro)capsules ZB1 and the tackiness agent ZB4, is delivered out of a container room ZZ2s. The tip portion of the nozzle ZZ41 defines a ball receiving hole ZZ4x receiving the magnetic ball ZZ41 which is formed with capsule discharging grooves ZZ4y by radially outwardly expanding the ball receiving hole ZZ4 at plural points for enabling the (micro)capsules ZB1 to be discharged. The position of each of the (micro)capsules ZB1 thus delivered onto one object S relative to the object S is provisionally fixed as it is by the tackiness agent ZB4. Thereafter, when the magnet ZZ58 located at the base end portion of the pair of tweezers ZZ5 is brought dose to the (micro)capsules ZB1, the magnetic particles ZB6 in each (micro)capsule ZB1 are attracted toward the magnet ZZ58 to break through the outer wall 2, thereby crushing each (micro)capsule ZB1 or assisting in facilitating crush of each (micro)capsule ZB1. Thus, the moisture-curing adhesive 3 is released. With lapse of several minutes, the moisture-curing adhesive 3 is cured in the presence of water (i.e., moisture) contained in air as a catalyst to bond the two objects to each other.

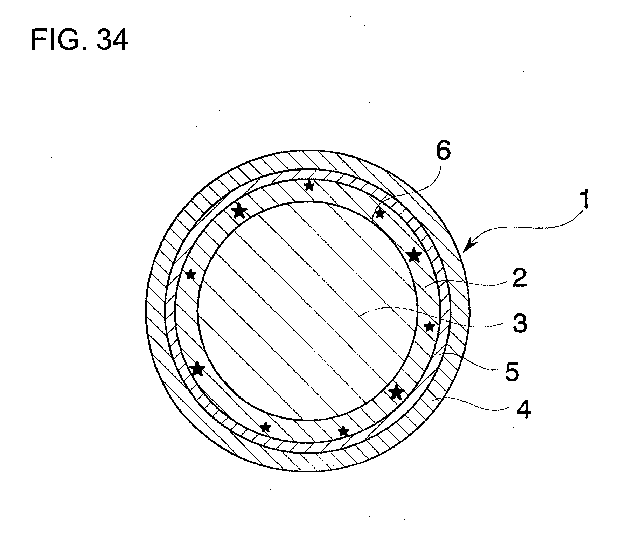

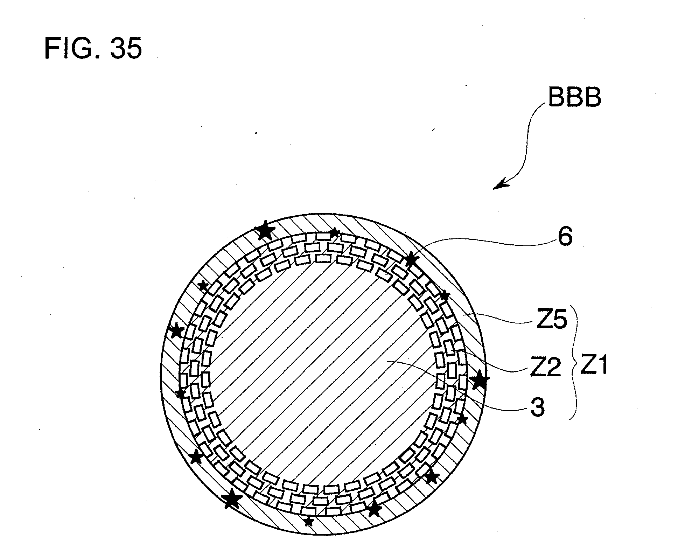

Other embodiments of such an adhesive material provided with the crush promoter particles include an adhesive material which comprises as a major component a capsule 1,10 having therein the moisture-curing adhesive 3 encapsulated with the outer wall 2, a coating layer 5 covering an outer surface of the outer wall 2, and crush promoter particles 6 placed within a thickness dimension of the outer wall 2, as illustrated in FIG. 33 or 34. Such an arrangement is capable of reducing the external force required to crush the capsule 1,10 because when the capsule 1,10 is subjected to pressing, the outer wall 2 as well as the coating layer 5 is broken at a point located adjacent each crush promoter particle 6 to allow the moisture-curing adhesive 3 to be released out of the capsule 1,10. Of course, such an adhesive material is possible which comprises as a major component the capsule 1,10 not provided with the coating layer 5, wherein the crush promoter particles 6 are placed within the thickness dimension of the outer wall 2. Alternatively, an adhesive material as illustrated in FIG. 35 is possible which comprises as a major component a (micro)capsule Z1 including porous particle Z2, moisture-curing adhesive 3 contained in a hollow of the porous particle Z2, coating layer Z5 covering pores which are present on a surface of the porous particle Z2, and crush promoter particles 6 placed within the coating layer 5. In the adhesive material comprising as a major component the capsule 1,10 as illustrated in FIG. 33 or 34, the crush promoter particles 6 may be placed between the outer wall 2 and the coating layer 5 instead of being placed within the thickness dimension of the outer wall 2.

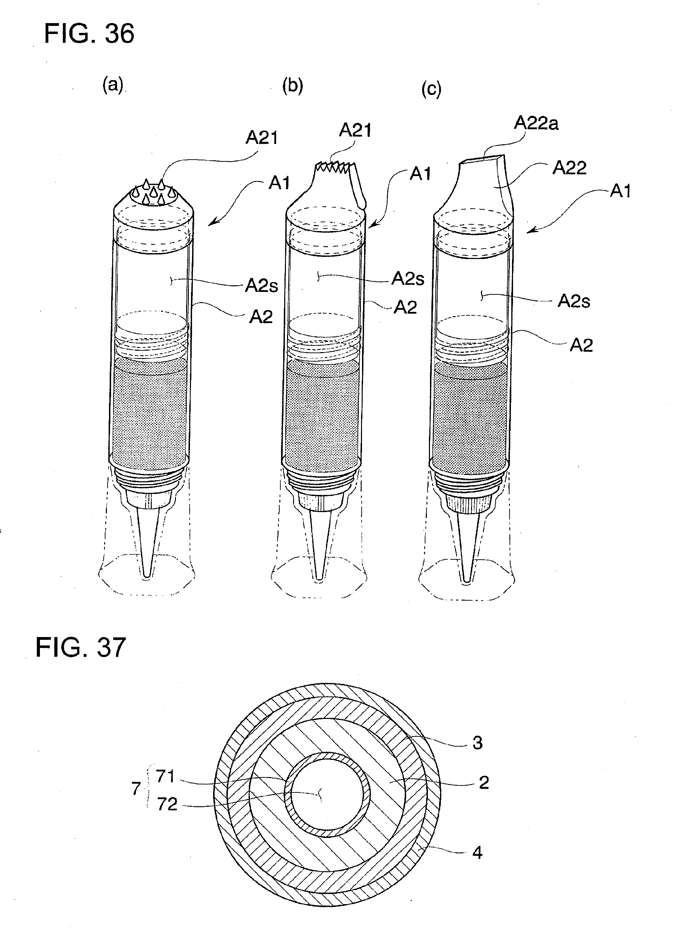

In a possible embodiment, the crush promoter element is provided on the adhesive material applicator side, whereas the capsule is not provided therein with the crush promoter particles. For example, as illustrated in FIG. 36, the adhesive material applicator A1 comprising the main body A2 having the container room A2s for containing the adhesive material B,BB,BBB therein may be arranged as follows. More specifically, such possible embodiments include: an embodiment as illustrated in FIG. 36(a) or 36(b) which has pointed head projections A21 on the base end portion of the main body A2 to serve as the crush promoter element capable of crushing the outer wall 2 or coating portion ZB5 by pressure contact with the adhesive material B,BB,BBB; and an embodiment as illustrated in FIG. 36(c) which has a spatula A22 as the crush promoter element capable of crushing the outer wall 2 or coating portion ZB5 by pressure surface contact with a surface applied with the adhesive material B,BB,BBB. Of course, such an adhesive material applicator A1 may be used for application of the adhesive material having the crush promoter particles inside the capsule.

Besides the embodiment which causes the magnetic particles to move by magnetic attraction thereby breaking through the outer wall or the coating layer to crush each (micro)capsule or assist in facilitating crush of each (micro)capsule and the embodiment which allows an additional mechanical action to be exerted on the outer wall or the coating layer thereby crushing the outer wall or the coating layer, there is a conceivable embodiment which allows the outer wall or the coating layer to be fused by heating.

For example, such a conceivable embodiment is such that with a contact surface formed on an adhesive material applicator being brought into contact with an application surface applied with an adhesive material, the application surface is rubbed by the contact surface to generate frictional heat between the contact surface and the application surface, thereby fusing the outer wall or the coating layer by the frictional heat to expose the moisture-curing adhesive. In this case, the contact surface functions as the crush promoter element. Alternatively, another conceivable embodiment is such that: an adhesive material applicator is provided with a rotation causing member; the adhesive material applicator is rotated by the rotation causing member to generate frictional heat between the contact surface and the application surface, thereby fusing the outer wall or the coating layer by the frictional heat to expose the moisture-curing adhesive. In this case, the contact surface and the rotation causing member function as the crush promoter element

As another embodiment of the adhesive material provided with the crush promoter particles, such an adhesive material is possible which employs an arrangement wherein in the adhesive material comprising as a major component the capsule 1 including the moisture-curing adhesive 3 encapsulated with the outer wall 2 and the tackiness agent coat 4 applied onto the outer surface of the outer wall 2, a balloon 7 is provided as a crush promoter particle on an inner side of the outer wall 2 of the capsule 1, the balloon 7 having an inner wall layer 71 which does not allow the moisture-curing adhesive 3 to pass therethrough and a hollow portion 72 which is surrounded by the inner wall layer 71 and contains gas such as air therein, as illustrated in FIG. 37. With such an adhesive material, it is possible that: the aforementioned adhesive material applicator A1 is used which is capable of generating frictional heat by being rotated in a state of contacting an application surface S; and the gas contained in the hollow portion 72 of the balloon 7 is expanded by the frictional heat to explode the balloon 7, whereby the outer wall 2 of the capsule 1 is crushed by the impact of the explosion to allow the moisture-curing adhesive 3 to come out of the capsule 1. Though not illustrated, magnetic particles may be mixed into the moisture-curing adhesive 3 as described above. In this case, an arrangement may be employed such that the magnetic particles are caused to break the inner wall of the balloon 7 by bringing a magnet dose to the capsule 1, thus causing the capsule 1 to shrink and then the outer wall 2 to be crushed by breakage of the balloon 7. Of course, it is also possible that a mechanical external force is exerted on the capsule 1 to break the inner wall of the balloon 7.

In another embodiment, it is possible to remove the outer wall or the coating layer by a chemical action.

For example, the (micro)capsules Z1 according to the foregoing third embodiment may be prepared by the following method in order for the coating layer Z5 of each (micro)capsule Z1 to be easily broken by a chemical reaction between the coating layer Z5 and a component contained in air. Specifically, the (micro)capsules Z1 are prepared by the method including: placing the porous particles Z2 under a vacuum atmosphere to remove air from each porous particle Z2; storing the porous particles Z2 as evacuated in a vacuum atmosphere such as a vacuum pouch; putting the porous particles Z2 into the moisture-curing adhesive 3 to allow the moisture-curing adhesive 3 to be contained in each porous particle Z2; and coating in the vacuum atmosphere the outer surface of each porous particle Z2 containing the moisture-curing adhesive 3 with the coating layer Z5 which becomes broken when its rigidity is lowered by chemical reaction with a component of air such as water, oxygen or the like. The (micro)capsules Z1 are preferably stored in a vacuum atmosphere until just before use. With such a method, when the (micro)capsules are released from the vacuum atmosphere into air, the coating layer Z5 becomes easy to break due to its rigidity lowered with time by the chemical reaction with a component of air such as water, oxygen or the like, thus allowing the moisture-curing adhesive 3 to be easily released from each (micro)capsule Z1.

In the embodiment described just above, instead of the coating layer Z5 which becomes easy to break due to its rigidity lowered by the chemical reaction with a component of air such as water, oxygen or the like, use may be made of a coating layer Z5 which becomes easy to break due to its rigidity lowered by a photochemical reaction caused by irradiation with light to prepare (micro)capsules Z1. With this embodiment, such (micro)capsules Z1 are preferably stored in a dark place until just before use.

The outer wall or the porous particles may be formed from plural materials. For example, use may be made of an outer wall or porous particles formed from a mixture of plural materials which are incompatible with each other and different in thermal expansion coefficient or thermal shrinkage factor from each other. With such a feature, the outer wall or each porous particle can be crushed easily when subjected to pressing because the outer wall or each porous particle is cracked or wrinkled to such an extent as not allow water, air or the like to penetrate the outer wall or the porous particle due to the difference in thermal expansion coefficient or thermal shrinkage factor between the plural materials forming the outer wall or the porous particle. Thus, the moisture-curing adhesive can be easily released.

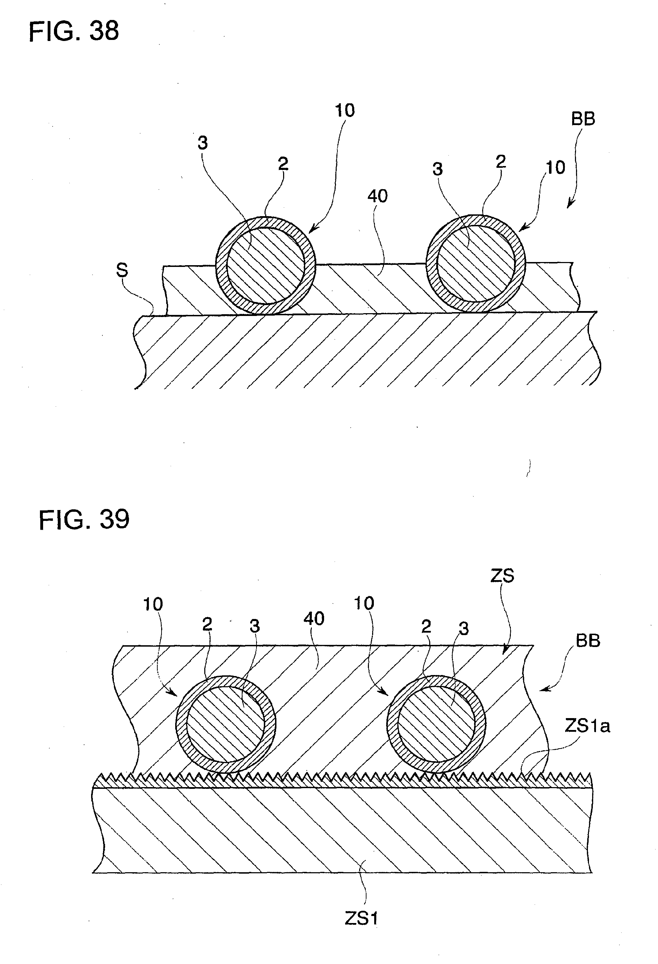

In the foregoing second embodiment, it is more preferable that application of the tackiness agent 40 is performed first and then the (micro)capsules 10 are dispersed in the tackiness agent 40 applied, while the coating thickness of the tackiness agent 40 made smaller than the diameter of each (micro)capsule 10 as illustrated in FIG. 38. With such a feature, it is possible to crush the (micro)capsules 10, thereby to release the moisture-curing adhesive 3 out of each (micro)capsule 10 more reliably because when an external force is exerted on the adhesive material having been applied onto one object of bonding to achieve bonding, the other object of bonding is brought into contact with the (micro)capsules 10 prior to contact with the tackiness agent 40. While FIG. 37 illustrates the adhesive material BB having the (micro)capsules 10 according to the second embodiment in a state of having been applied to an object, the adhesive material according to the third embodiment may be applied to have a smaller coating thickness of the tackiness agent 40 than the diameter of each (micro)capsule Z1.

In cases where the transfer sheet ZS prepared by application of the adhesive material B,BB according to the foregoing first or second embodiment onto the release base ZS1 is used to transfer the adhesive material B,BB to one object of bonding, the crush promoter element may be provided on a surface of the release base ZS1 lying on the side for receiving application of the adhesive material B,BB. The crush promoter element may comprise projections ZS1a forming a crush promoter layer provided on the surface of the release base ZS1 lying on the side for receiving application of the adhesive material B,BB. Such a crush promoter element may comprise crush promoter particles prepared using fine particles of metal or inorganic crystal having high hardness or the like. With such a transfer sheet ZS, the projections ZS1a forming the crush promoter element are pressed against the adhesive material B,BB when the adhesive material B,BB is transferred from the transfer sheet ZS to one object of bonding. For this reason, it is possible to eliminate the time and effort for crushing the outer wall 2 of the adhesive material B,BB otherwise, thereby to proceed with bonding to the other object immediately. In cases where the adhesive material BB according to the foregoing second embodiment is used, it is more preferable that the mass per unit volume of the (micro)capsules 10 is made different from that of the tackiness agent 40. For example, in cases where the surface of the transfer sheet ZS lying on the side for receiving application of the adhesive material BB is oriented upward and then the adhesive material BB is transferred to one object by bringing the object into contact with the transfer sheet ZS, the (micro)capsules 10 having a mass per unit volume made larger than that of the tackiness agent 40 move downwardly to come doser to the projections ZSa1 forming the crush promoter element. Therefore, the (micro)capsules 10 can be brought into contact with the projections ZS1a more quickly when the adhesive material BB is applied onto an object of bonding, thus making it easier to reduce the time and effort for crushing the outer wall 2 of the adhesive material BB.

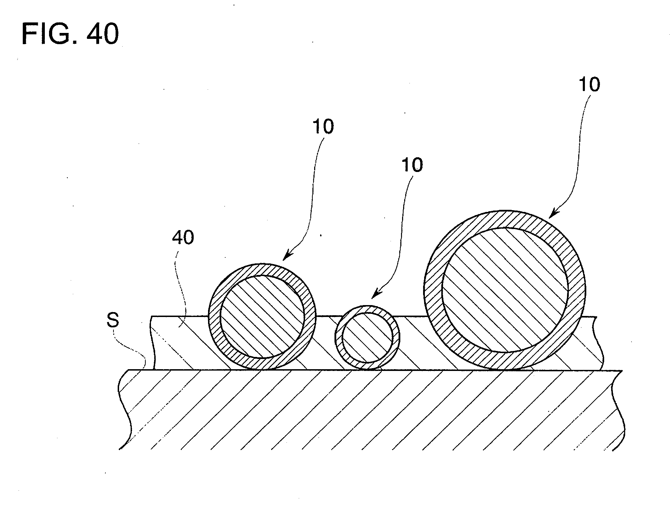

An adhesive material may be prepared using (micro)capsules 10 having different sizes as illustrated in FIG. 40. With the presence of the (micro)capsules 10 having different sizes, the external force required to crush an individual (micro)capsule need not be so large because in crushing the (micro)capsules 10 by an external force, all the (micro)capsules are not simultaneously subjected to the external force but are sequentially subjected to the external force from larger ones to smaller ones in such a manner that largest ones are first subjected to the external force. While FIG. 34 illustrates the adhesive material BB having the (micro)capsules 10 according to the second embodiment, the adhesive material according to each of the first and third embodiments may comprise (micro)capsules having different sizes.

The outer wall of each capsule or microcapsule according to the first or second embodiment may be formed using a water repellent material. Likewise, the porous particles used in the adhesive material according to the third embodiment may be formed using such a water repellent material. With such a feature, it is possible to inhibit water from reaching the interior of each capsule or microcapsule by virtue of the water repellency of the outer wall or porous particle, thereby to prevent occurrence of an inconvenience that the moisture-curing adhesive contained in each capsule or microcapsule solidifies before use. Of course, the same effect will result even when the coating layer covering the outer wall or the pores of each porous particle is formed using such a water repellent material. Also, the same effect will result not only when the coating layer is formed from the water repellent material only, but also when the coating layer is formed from a material prepared by mixing the water repellent material into another material.

It should be noted that the foregoing embodiments may be modified or varied without departing from the concept of the present invention.

### Industrial Applicability

The adhesive material according to the present invention, which has the moisture-curing adhesive encapsulated with the outer wall of each capsule or microcapsule, is capable of shielding the adhesive from water contained in air by the outer wall, thereby making it possible to store the adhesive for a longer period of time as well as to suppress emission of the smell peculiar to the adhesive.

Particularly, the adhesive material in which the capsules or microcapsules each have the tackiness agent coat formed over the outer surface of the outer wall, or the adhesive material in which the plurality of capsules or microcapsules are dispersed in the tackiness or adhesive agent, allows each capsule or microcapsule to be positioned relative to one object of bonding by fixing the capsule or microcapsule onto the object by means of the tackiness agent coat or the tackiness or adhesive agent and then crushed by the pressure working in pressing the object and the other object of bonding against each other, thereby releasing the moisture-curing adhesive to achieve bonding.

## Claims

1. An adhesive material **characterized by** comprising as a major component a capsule including: a waterproof outer wall capable of being crushed by an external force; and a moisture-curing adhesive encapsulated with the outer wall.

2. An adhesive material **characterized by** comprising a microcapsule including: a waterproof outer wall capable of being crushed by an external force; and a moisture-curing adhesive encapsulated with the outer wall.

3. An adhesive material **characterized by** comprising a plurality of capsules or microcapsules each including: a waterproof outer wall capable of being crushed by an external force; a moisture-curing adhesive encapsulated with the outer wall; and a tackiness agent coat formed over an outer surface of the outer wall.

4. An adhesive material **characterized by** comprising a plurality of capsules or microcapsules each including: a waterproof outer wall capable of being crushed by an external force; and a moisture-curing adhesive encapsulated with the outer wall, the plurality of capsules or microcapsules being dispersed in a tackiness or adhesive agent.

5. The adhesive material according to claim 3 or 4, wherein the capsules or microcapsules each have a diameter made larger than a coating thickness of the tackiness or adhesive agent.

6. The adhesive material according to any one of claims 1 to 5, wherein: a main bond threshold value, which is a lower limit of the external force at which the capsules or microcapsules are mostly crushed, is not less than 10 N/cm² and less than 150 N/cm²; and the outer wall has a strength set so as not to allow any one of the capsules or microcapsules to be crushed by an external force of less than a provisional bond threshold value which is not more than a predetermined value which is not more than a smaller one of the main bond threshold value and a value of 50 N/cm².

7. The adhesive material according to claim 6, wherein the main bond threshold value is not less than a value twice as large as the provisional bond threshold value.

8. The adhesive material according to claim 7, wherein the main bond threshold value is not less than a value 2.5 times as large as the provisional bond threshold value and less than a value 6 times as large as the provisional bond threshold value.

9. The adhesive material according to any one of claims 1 to 8, wherein the moisture-curing adhesive is a cyanoacrylate adhesive.

10. An adhesive material **characterized by** comprising as a major component a capsule or microcapsule including: a porous particle; and a moisture-curing adhesive contained in a hollow of the porous particle.

11. The adhesive material according to claim 10, wherein the porous particle is formed from an inorganic material.

12. The adhesive material according to claim 10 or 11, wherein the capsule or microcapsule further includes a coating layer covering pores which are present on a surface of the porous particle.

13. The adhesive material according to any one of claims 10 to 12, wherein the capsule or microcapsule further includes a tackiness agent coat formed over an outer surface thereof.

14. The adhesive material according to any one of claims 10 to 12, wherein the capsule or microcapsule comprises a plurality of such capsules or microcapsules dispersed in a tackiness or adhesive agent.

15. The adhesive material according to any one of claims 1 to 14, further comprising crush promoter particles for promoting crush of the capsule or microcapsule.

16. The adhesive material according to any one of claims 1 to 15, wherein the outer wall of the capsule or microcapsule, the porous particle or the coating layer covering the outer wall or the pores of the porous particle is formed using a water repellent material.

17. The adhesive material according to any one of claims 1 to 16, wherein the outer wall of the capsule or microcapsule or the porous particle is formed from a plurality of materials by using a mixture of the plural materials which are incompatible with each other and different in thermal expansion coefficient or thermal shrinkage factor from each other.

18. The adhesive material according to any one of claims 1 to 17, which includes capsules or microcapsules having different sizes.

19. An adhesive material applicator **characterized by** comprising: a main body having a container room for containing the adhesive material recited in claim 3 or 13; and a nozzle for delivering the adhesive material by portions from the container room to outside.

20. The adhesive material applicator according to claim 19, which is provided with a refill charged with the adhesive material for refilling the container room and removably attached to the main body.

21. The adhesive material applicator according to claim 19 or 20, wherein the nozzle is provided at a tip thereof with a delivery limiting roller for controlling a delivery of the adhesive material.

22. The adhesive material applicator according to any one of claims 19 to 21, further comprising a pair of tweezers having a pinching portion capable of pinching an object of bonding and a pressing surface provided at a base end of the pinching portion for pressing against the object of bonding, the pair of tweezers being mountable on an outer peripheral surface of the main body.

23. An adhesive material applicator for application of the adhesive material recited in claim 4 which includes the plurality of capsules or microcapsules each including the waterproof outer wall capable of being crushed by the external force and the moisture-curing adhesive encapsulated with the outer wall, the plurality of capsules and microcapsules being dispersed in the tackiness or adhesive agent, or for application of the adhesive material recited in claim 14 which includes the plurality of capsules or microcapsules each including the porous particle and the moisture-curing adhesive contained in the hollow of the porous particle, the plurality of capsules and microcapsules being dispersed in the tackiness or adhesive agent,
the adhesive material applicator comprising: a main body provided therein with a capsule container room for containing the capsules or microcapsules and a tackiness liquid container room for containing the tackiness or adhesive agent; and a nozzle for delivering the adhesive material comprising the capsules or microcapsules mixed in the tackiness or adhesive agent out of the main body.

24. The adhesive material applicator according to claim 23, wherein the capsule container room and the tackiness liquid container room are formed in a refill which is removable from the main body.

25. An adhesive material applicator for application of the adhesive material recited in claim 4 which includes the plurality of capsules or microcapsules each including the waterproof outer wall capable of being crushed by the external force and the moisture-curing adhesive encapsulated with the outer wall, the plurality of capsules and microcapsules being dispersed in the tackiness or adhesive agent, or for application of the adhesive material recited in claim 14 which includes the plurality of capsules or microcapsules each including the porous particle and the moisture-curing adhesive contained in the hollow of the porous particle, the plurality of capsules and microcapsules being dispersed in the tackiness or adhesive agent,
the adhesive material applicator comprising: a pair of flaps foldably joined to each other by means of a hinge portion; a deformable capsule container portion containing the capsules or microcapsules therein which is provided on one of the flaps; a deformable tackiness liquid container portion containing the tackiness or adhesive agent therein which is provided on the other flap; and a nozzle configured to join the capsules or microcapsules and the tackiness or adhesive agent together and then deliver a resulting mixture to outside when the capsules or microcapsules and the tackiness or adhesive agent are pushed out of the capsule container portion and the tackiness liquid container portion, respectively, by compression of the capsule container portion and the tackiness liquid container portion by an operation of folding the flaps toward each other.

26. The adhesive material applicator according to any one of claims 19 to 25, wherein the capsules or microcapsules each have an outer diameter set to a value of not less than 2 µm and less than 3,000 µm.

27. A transfer sheet **characterized by** comprising a sheet-shaped release base comprising paper or film, and the adhesive material recited in claim 3 or 13 applied onto the release base.

28. A transfer sheet **characterized by** comprising a sheet-shaped release base comprising paper or film, and the adhesive material recited in claim 4 or 14 applied onto the release base.

29. The transfer sheet according to claim 28, wherein the adhesive material is applied in a dotted fashion.

30. The transfer sheet according to any one of claims 27 to 29, wherein the capsules or microcapsules each have an outer diameter set to a value of not less than 2 µm and less than 300 µm.

31. The transfer sheet according to any one of claims 27 to 30, further comprising crush promoter particles provided on a surface of the release base lying on a side onto which the adhesive material is applied for promoting crush of the capsules or microcapsules.
